Europäisches Patentamt

European Patent Office

Office européen des brevets

(19)

(11) Numéro de publication : **0 555 432 B1**

## FASCICULE DE BREVET EUROPEEN

(12)

(45) Date de publication du fascicule du brevet :
**11.10.95 Bulletin 95/41**

(51) Int. Cl.$^6$ : **H02M 3/158,** H02M 5/297,
H02M 7/48

(21) Numéro de dépôt : **92916336.8**

(22) Date de dépôt : **08.07.92**

(86) Numéro de dépôt international :
**PCT/FR92/00652**

(87) Numéro de publication internationale :
**WO 93/02501 04.02.93 Gazette 93/04**

(54) **DISPOSITIF ELECTRONIQUE DE CONVERSION D'ENERGIE ELECTRIQUE.**

(30) Priorité : **25.07.91 FR 9109582**

(43) Date de publication de la demande :
**18.08.93 Bulletin 93/33**

(45) Mention de la délivrance du brevet :
**11.10.95 Bulletin 95/41**

(84) Etats contractants désignés :
**AT CH DE ES FR GB IT LI NL SE**

(56) Documents cités :
**DE-A- 2 435 392
IEEE TRANS. ON AEROSPACE AND ELEC-
TRONIC SYSTEMS vol. 24, no. 6, Novembre
1988, NEW YORK pages 743 - 754 TYMERSKI
'Generation and classification of PWM DC-
to-DC converters'**

(56) Documents cités :
**INTERNATIONAL JOURNAL OF ELECTRO-
NICS vol. 68, no. 1, Janvier 1990, LONDON
pages 143 - 160 NAKAOKA 'New efficient
high-frequency power inverter with inductive
energy processing loops'**

(73) Titulaire : **CENTRE NATIONAL DE LA
RECHERCHE SCIENTIFIQUE (CNRS)
3, rue Michel Ange
F-75016 Paris (FR)**

(72) Inventeur : **MEYNARD, Thierry
57, rue Labat-de-Savignac
F-31400 Toulouse (FR)**
Inventeur : **FOCH, Henri
78, avenue Maignan
F-31200 Toulouse (FR)**

(74) Mandataire : **Barre, Philippe
Cabinet Barre Laforgue et associés
95 rue des Amidonniers
F-31000 Toulouse (FR)**

EP 0 555 432 B1

## Description

L'invention concerne un dispositif électronique de conversion d'énergie électrique entre une source de tension et une source de courant, comprenant -n- cellules de commutation commandables réalisées chacune au moyen de deux interrupteurs travaillant en complémentarité, avec $n \geqq 2$.

Conformément aux définitions fournies dans les "Techniques de l'Ingénieur, Vol. Electronique, pp : D3-150 et suivantes", par "source de tension", on entend un dipole électrique (générateur ou récepteur) dont la tension aux bornes ne peut subir de discontinuité du fait du circuit extérieur audit dipole (exemples : batterie d'accumulateurs, réseau de distribution alternatif, condensateur de valeur élevée...) ; par "source de courant", on entend un dipole électrique (récepteur ou générateur) qui est traversé par un courant ne pouvant subir de discontinuité du fait du circuit extérieur audit dipole (exemples : charge inductive, bobine, machine à courant continu...).

De façon traditionnelle, les dispositifs de conversion statiques sont constitués d'association de cellules de commutation, formées chacune de deux interrupteurs aux fonctionnements complémentaires, l'un étant conducteur quand l'autre est bloqué ; chaque cellule possède une logique de commande associée qui assure la complémentarité et gère les échanges d'énergie en fonction de l'application.

Une variante de ces dispositifs de conversion, dite "onduleur à trois niveaux", est connue et utilisée depuis 1981 dans le domaine de la haute tension (références : "Ch. Bächle et al, Requirements on the control of a three-level four quadrant power converter in a traction application, Proceeding E.P.E. Aachen 1989, pp 577 à 582" ; B. Velaerts et al, New developments of 3-level PWM strategies, Proceeding E.P.E. Aachen 1989, pp 411 à 416"). Les dispositifs de ce type sont constitués de modules de quatre interrupteurs et ces derniers sont imbriqués pour former deux séries et ne fonctionnent plus en complémentarité ; deux diodes sont connectées à un point milieu capacitif relié à la source de tension afin de limiter à la demi-tension la valeur des tensions supportées par chacun des 4 interrupteurs et de fournir trois niveaux de tension de sortie, (d'où le nom de "onduleur à 3 niveaux" de ces dispositifs). Une commande spécifique est nécessaire dans ce type de dispositif pour permettre au jeu de diodes de jouer son rôle d'écrétage et de division de tension, mais cette commande est incompatible avec une complémentarité du fonctionnement des interrupteurs des deux séries. Dans ces conditions, un tel dispositif fournit en sortie une ondulation de tension dont l'amplitude et la fréquence sont liées :

- ou bien cette ondulation s'effectue entre le niveau de tension intermédiaire et l'un des niveaux extrêmes et présente donc une amplitude qui n'est qu'une fraction $(V/2)$ de la tension globale d'alimentation $(V)$, la fréquence de cette ondulation étant alors égale à la fréquence de commande $(F)$ des interrupteurs,
- ou bien cette ondulation recouvre les trois niveaux de tension et présente donc une amplitude égale à la tension globale d'alimentation $(V)$ mais, dans ce cas, la fréquence de cette ondulation est multiple de la fréquence de commande de chaque interrupteur $(2F)$.

Dans le premier cas, la valeur limitée $(V/2)$ de l'amplitude de l'ondulation de la tension de sortie tendrait à faciliter son filtrage, mais celui-ci doit éliminer une fréquence faible F, ce qui limite cet avantage. Inversement, dans le second cas, la fréquence élevée $(2F)$ de l'ondulation de la tension de sortie tendrait à faciliter son filtrage, mais la forte valeur de l'amplitude de celle-ci $(V)$ limite cet avantage. En conséquence, par leur nature même, ces dispositifs ne permettent pas de bénéficier des avantages conjugués d'une réduction d'amplitude $(V/2)$ et d'une multiplication de fréquence $(2F)$.

En outre, le caractère très spécifique de la commande de ces dispositifs dont les interrupteurs ne fonctionnent pas en complémentarité limite à quatre le nombre d'interrupteurs qu'ils peuvent comporter par module.

Il est à noter que certains convertisseurs traditionnels (les onduleurs à modulation de largeur d'impulsion) sont constitués d'associations de cellules de commutation qui sont agencées en parallèle sur la source de tension, avec la source de courant connectée entre lesdites cellules de commutation ; dans ces onduleurs, les interrupteurs de chaque cellule fonctionnent en mode complémentaire ("Patel et Hoft, generalised techniques of harmonic elimination and voltage control in thyristor inverters, I.E.E.E. Transactions on industry applications, vol. IA.9, n. 3, mai-juin 73"). Ces dispositifs peuvent présenter les avantages cumulés indiqués précédemment (ondulation réduite de tension et fréquence multiple) ; toutefois, dans ces onduleurs, chaque interrupteur doit supporter la totalité de la tension globale d'alimentation ce qui, pour des tensions élevées, est un défaut grave par rapport aux dispositifs précédents dans lesquels la tension aux bornes de chaque interrupteur est une fraction $(V/2)$ de la tension globale $(V)$. De plus, le nombre de niveaux de tension délivrés en sortie de ces onduleurs est limité à trois et la multiplication de fréquence limitée à 2, quel que soit le nombre de cellules en parallèle.

La présente invention se propose de fournir un dispositif de conversion perfectionné, qui associe les avantages suivants :

- possibilité de mettre en jeu un nombre élevé de cellules (n), ce nombre pouvant être égal à 2, mais également à une valeur supérieure (3 ou davantage),

- tension supportée par chaque interrupteur égale à une fraction ($V/_n$) de la tension totale d'alimentation (V),
- ondulation de la tension de sortie d'amplitude limitée à la fraction ($V/_n$) de la tension totale,
- fréquence de cette ondulation multiple (nF) de la fréquence de commutation de chaque interrupteur (F).

A cet effet, le dispositif visé par l'invention pour la conversion d'énergie électrique entre une source de tension et une source de courant comprend les moyens suivants :

. -n- cellules de commutation commandables, comportant chacune deux interrupteurs, avec n $\cong$ 2, chaque cellule étant repérée par un rang k avec 1 $\leqq$ k $\leqq$ n,

. une logique de commande connectée à chaque cellule de commutation pour lui délivrer des signaux de commande de fréquence F, aptes à assurer des commutations opposées des deux interrupteurs de la cellule,

. des moyens de pilotage adaptés pour délivrer vers les logiques de commande un signal de référence sr fonction de la conversion d'énergie désirée,

. -n- interrupteurs homologues des cellules connectés en série et les -n- autres interrupteurs homologues étant eux-mêmes connectés en série, de façon à réaliser deux séries symétriques, dites série A et série B, dans lesquelles les deux interrupteurs d'une même cellule occupent des positions symétriques par rapport à la source de courant,

. les deux séries A et B d'interrupteurs étant interconnectées, d'une part, par une extrémité commune, à la source de courant, d'autre part, par leurs extrémités opposées, à la source de tension, le rang k affecté aux cellules croissant depuis la cellule dont les interrupteurs sont directement connectés à la source de courant (k = 1) jusqu'à la cellule dont les interrupteurs sont directement connectés à la source de tension (k = n).

Le dispositif conforme à la présente invention, se caractérise en ce que :

. des condensateurs sont associés aux cellules de commutation de façon que les bornes symétriques des deux interrupteurs de chaque cellule soient reliées entre elles à travers un condensateur en vue de maintenir entre lesdites bornes une tension, dite tension de charge du condensateur, et d'assurer une circulation alternée de courant d'un interrupteur vers l'autre interrupteur de la cellule,

. les logiques de commande des -n- cellules de commutation sont synchronisées pour répartir dans le temps leurs signaux de commande de sorte que le courant circulant dans chaque condensateur présente, sur une période $1/_F$, une valeur moyenne sensiblement proportionnelle à la variation de la tension aux bornes de la source de tension sur cette même période, et en particulier sensiblement nulle pour une source de tension continue.

Comme on le comprendra mieux plus loin, les condensateurs agencés aux bornes de chaque cellule supportent des fractions croissantes de la tension de la source en fonction de leur rang. La différence entre les tensions de charge des condensateurs successifs est ainsi égale à $V/_n$, et c'est cette différence ($V/_n$) que supportent les deux interrupteurs de la cellule reliée aux deux condensateurs considérés. De plus, la synchronisation des logiques de commande permet d'obtenir une fréquence de l'ondulation de la tension de sortie (nF) multiple de la fréquence de commande (F) en raison des décalages des commutations des n cellules qui se répartissent sur chaque période $1/_F$. En outre, ce décalage entraîne l'apparition de -n- niveaux distincts de la tension de sortie (-n- niveaux répartis régulièrement sur la période $1/_F$, deux niveaux voisins étant séparés par une tension égale à $V/_n$).

Le fonctionnement de chaque cellule est similaire à celui de la cellule voisine (au décalage temporel près) de sorte qu'il est possible de concevoir aisément dans chaque application des logiques de commande permettant de gérer les échanges d'énergie souhaités quel que soit le nombre -n- de cellules mises en jeu (ces logiques de commande étant toutes structurellement analogues puisque les signaux de commande qu'elles délivrent possèdent les mêmes motifs et se déduisent les uns des autres par décalage).

La description qui suit en référence aux dessins annexés illustre l'invention ; sur ces dessins qui font partie intégrante de la présente description :

- la figure 1 est un schéma électrique de principe du dispositif de conversion de l'invention, qui illustre sa partie puissance et sa partie commande,
- la figure 2 représente un exemple de réalisation de la partie commande de ce dispositif,
- la figure 3a illustre les signaux logiques délivrés vers deux cellules successives k et k+1,
- les figures 3b et 3c illustrent respectivement l'allure du courant traversant le condensateur $C_k$ associé à la cellule de rang k et l'allure de la tension $V_{ck}$ aux bornes de ce condensateur.
- la figure 4 est un schéma électronique d'un mode de réalisation du dispositif de l'invention dans le cas d'une source de tension continue et d'une source de courant continu (hacheur de courant continu),
- la figure 5 illustre l'allure des divers signaux relatifs à la partie commande de ce dispositif,

- la figure 6 illustre l'allure des courants et tensions dans la partie puissance de ce dispositif, la figure 7 illustrant l'allure des tensions aux bornes des condensateurs,
- la figure 8 est un schéma électronique d'un autre mode de réalisation dans le cas d'une source de tension constante et d'une source de courant alternatif symétrique,
- la figure 9 illustre l'allure des divers signaux relatifs à la partie commande de ce dispositif,
- la figure 10 illustre l'allure des courants et tensions dans la partie puissance de ce dispositif, la figure 11 illustrant l'allure des tensions aux bornes des condensateurs.
- la figure 12 est un schéma d'une variante du dispositif de la figure 8, pourvue de deux cellules de commutation,
- les figures 13 et 14 illustrent l'allure de signaux du dispositif de la figure 12,
- la figure 15 est un schéma électronique d'un autre mode de réalisation dans le cas d'une source de tension alternative et d'une source de courant constant,
- les figures 16, 17, 18, 19, 20 et 21 illustrent l'allure de signaux du dispositif de la figure 15,
- la figure 22 est un schéma électronique d'un autre mode de réalisation dans le cas d'une source de tension alternative et d'une source de courant alternatif,

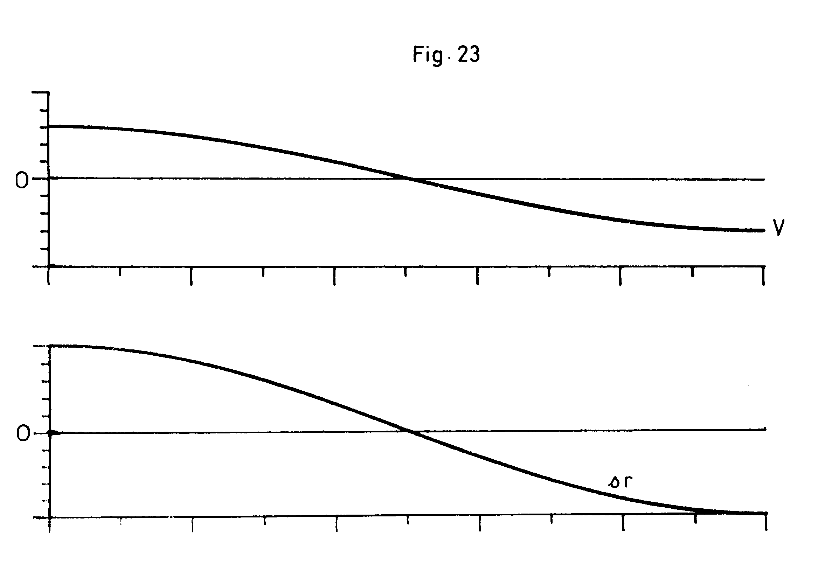

- les figures 23, 24, 25, 26 et 27 illustrent l'allure de signaux du dispositif de la figure 22.

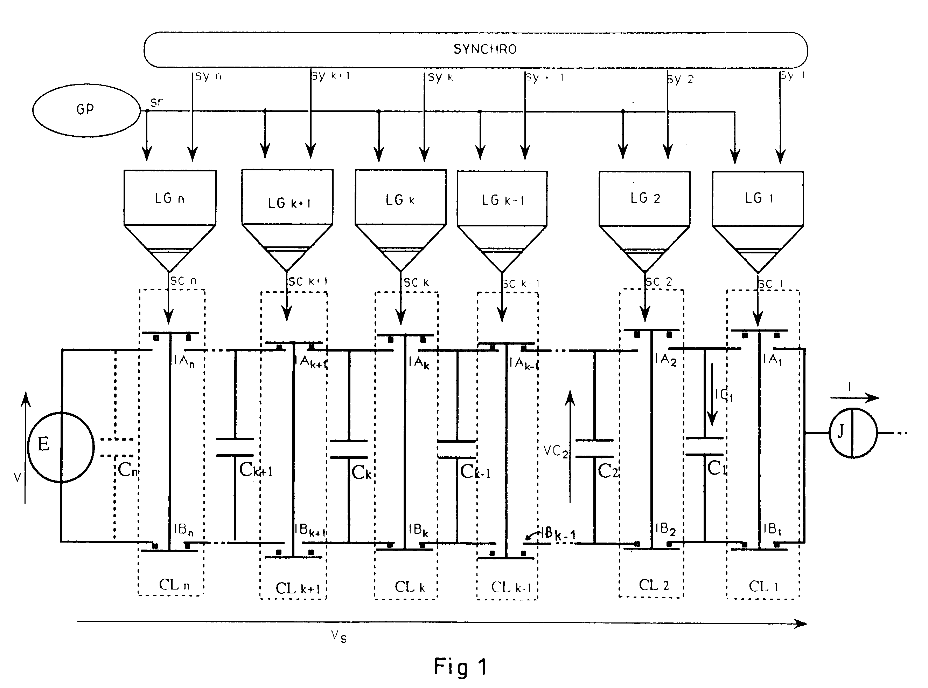

Le dispositif représenté à la figure 1 comprend n cellules de commutation $CL_1$, $CL_2$... $CL_k$... $CL_n$, n étant un entier quelconque supérieur ou égal à 2. Chaque cellule est composée de deux interrupteurs symbolisés en $I_{Ak}$ et $I_{Bk}$ qui sont commandés pour présenter des états complémentaires à tout instant ; ces interrupteurs sont avantageusement des interrupteurs statiques à semi-conducteurs.

n interrupteurs des n cellules sont connectés en série et constituent la série A du dispositif, les n autres interrupteurs connectés en série formant la série B. Les deux séries A et B d'interrupteurs sont interconnectées, d'une part, par une extrémité commune, à une source de courant J (selon la définition déjà fournie), d'autre part, par leurs extrémités opposées, aux bornes d'une source de tension E (selon la définition déjà fournie). La cellule $CL_1$ est directement connectée à la source de courant J, les autres cellules s'éloignant de ladite source lorsque leur rang k augmente, jusqu'à la cellule de rang n qui est directement connectée aux bornes de la source de tension E.

La source de courant J et la source de tension E peuvent présenter des caractéristiques différentes selon l'application (continue, alternative, génératrice, réceptrice). Les interrupteurs sont choisis en fonction de ces caractéristiques de façon que leur réversibilité en tension soit identique à celle de la source de tension E et que leur réversibilité en courant soit identique à celle de la source de courant J.

A chaque cellule de commutation $CL_k$, est associé un condensateur $C_k$ qui est connecté entre les bornes symétriques des deux interrupteurs $I_{Ak}$ et $I_{Bk}$ de la cellule concernée $CL_k$, (le condensateur $C_k$ de rang k étant connecté entre la borne commune des interrupteurs $I_{Ak}$ et $I_{Ak+1}$ d'une part, et la borne commune des interrupteurs $I_{Bk}$ et $I_{Bk+1}$ d'autre part). La dernière cellule $CL_n$ peut être associée à un condensateur spécifique $C_n$ (représenté en traits discontinus à la figure 1) dans l'hypothèse où la source E ne serait pas une source de tension parfaite en vue de compenser ses imperfections ; dans le cas contraire, la source E, parfaite, joue le rôle de condensateur $C_n$ à l'égard de la cellule $CL_n$.

L'interrupteur bloqué ($I_{Ak}$ en l'exemple dessiné) de la cellule $CL_k$ supporte la différence des tensions $V_{ck}$ - $V_{ck-1}$ existant aux bornes des deux condensateurs adjacents $C_k$ et $C_{k-1}$. Chaque condensateur a pour fonction de maintenir à ses bornes une tension, dite tension de charge $V_{ck}$ du condensateur ; une répartition de ces tensions de charge proportionnelle au rang du condensateur $V_{ck} = kV/_n$ (V étant la tension aux bornes de la source E) garantit aux bornes des interrupteurs bloqués une différence de tension $V_{ck}$ - $V_{ck-1}$ égale à $V/_n$ pour tous les interrupteurs bloqués. Selon les états des interrupteurs des deux cellules $CL_{k+1}$ et $CL_k$, le condensateur $C_k$ associé à la cellule $CL_k$ est parcouru par un courant $i_{ck}$ égal à : + I, 0 ou - I (I étant le courant qui traverse la source de courant J). Chaque condensateur $C_k$ est donc dimensionné pour présenter une capacité $c_k$ suffisante pour que les variations de tension $V_{ck}$ à ses bornes soient faibles par rapport à la tension $kV/_n$ et en particulier inférieures à 0,2 $V/_n$ (la tension maximale aux bornes des interrupteurs bloqués est alors limitée à 1,4 $V/_n$).

En outre, chaque condensateur est choisi pour présenter une tenue en tension fonction croissante de son rang, supérieure à la valeur $k \cdot \dfrac{V_{max}}{n}$ , où $V_{max}$ est la valeur maximale de la tension V. Bien entendu, rien ne s'oppose à ce que les condensateurs soient identiques : ils seront alors dimensionnés pour supporter la tension $V_{max}$ (qui est susceptible de s'appliquer au dernier d'entre eux).

Par ailleurs, le dispositif comporte n logiques de commande $LG_1$... $LG_k$... $LG_n$, une logique étant connectée à chaque cellule de commutation pour lui délivrer des signaux de commande logique $sc_1$, $sc_2$... $sc_k$... $sc_n$ de fréquence F aptes à assurer les commutations opposées des deux interrupteurs de la cellule à la fréquence F.

Chaque logique de structure connue, généralement constituée par un comparateur et par un circuit d'adaptation (fonction du type d'interrupteur qu'elle commande), reçoit de la part de moyens de pilotage (symbolisés par un générateur de pilotage GP aux figures) un signal de référence sr continu (DC) ou alternatif (AC) qui est fonction de la conversion d'énergie désirée. Ce générateur dépend de l'application et peut par exemple fournir un signal de référence conditionnant une régulation de courant (courant de sortie I de valeur donnée quelles que soient les variations de la tension d'entrée V).

Les logiques de commande $LG_k$ peuvent être structurellement identiques et c'est par leur synchronisation que l'on gère les commutations décalées des cellules $CL_k$ pour que :

. l'ondulation de la tension de sortie $V_s$ présente une amplitude égale à $V/_n$ et une fréquence égale à nF, multiple de la fréquence de commutation F des interrupteurs $I_{Ak}$ et $I_{Bk}$,

. la tension supportée par chaque condensateur $V_{ck}$ soit égale à la fraction $kV/_n$ de la tension d'alimentation V.

A cet effet, les logiques de commande sont reliées à des moyens de synchronisation SYNCHRO adaptés pour délivrer vers lesdites logiques des signaux de synchronisation $sy_1...$ $sy_k...$ $sy_n$ aptes à imposer la loi de répartition dans le temps des signaux de commande $sc_k$ issus des logiques $LG_k$. Cette répartition des signaux de commande permet de contrôler la tension $V_{ck}$ aux bornes de chaque condensateur de sorte que celle-ci soit sensiblement proportionnelle à son rang k $(kV/_n)$.

Ce résultat est obtenu en contrôlant le courant $i_{ck}$ circulant dans chaque condensateur de sorte que celui-ci présente, sur une période $1/_F$, une valeur moyenne sensiblement proportionnelle à la variation de la tension aux bornes de la source de tension E sur cette même période, et en particulier sensiblement nulle pour une source de tension continue. Ce contrôle peut en particulier être réalisé en délivrant vers les logiques de commande $LG_k$ des signaux de synchronisation $sy_k$ qui conditionnent à la sortie desdites logiques des signaux de commande $sc_k$ décalés dans le temps, imposant des états logiques $e_k$ et $e_{k+1}$ des cellules adjacentes de durées relatives prédéterminées. L'état logique $e_k$ d'une cellule $CL_k$ est défini comme égal à 1 lorsque l'interrupteur $I_{Ak}$ de la cellule faisant partie de la série A est passant (l'autre interrupteur $I_{Bk}$ de la cellule, de la série B, étant bloqué), et égal à 0 lorsque l'interrupteur de ladite série A est bloqué (l'autre interrupteur de la cellule, de la série B, étant passant).

Comme on le verra dans les exemples qui suivent, la structure des moyens de synchronisation dépend des caractéristiques des source de tension E et source de courant J.

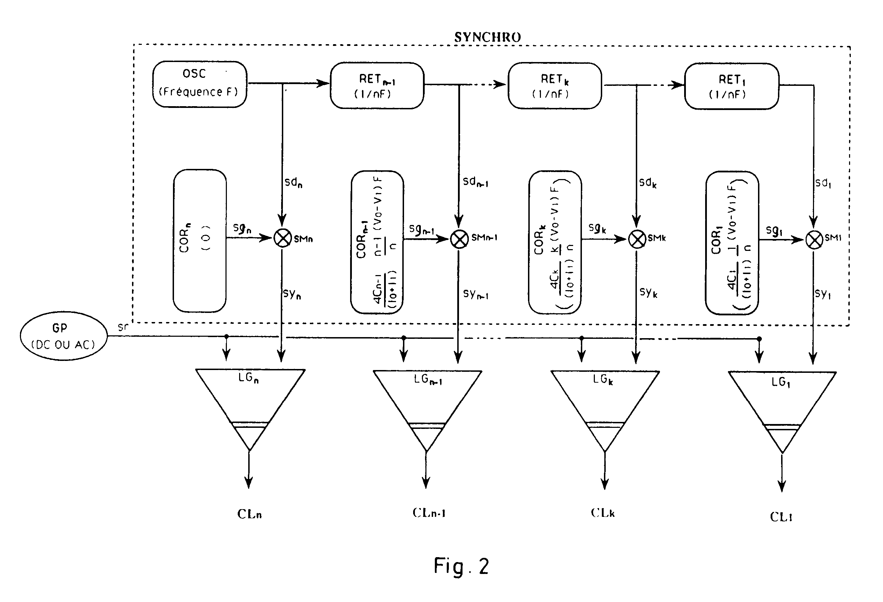

La figure 2 explicite une structure possible des moyens de synchronisation SYNCHRO.

Ces moyens de synchronisation comprennent en cet exemple un oscillateur OSC de fréquence F et une succession de circuits retards $RET_k$, qui engendrent un système de n signaux $sd_k$ décalés pour deux signaux successifs d'un écart temporel égal à $1/_{nF}$. Ces signaux sont corrigés dans n sommateurs $SM_k$ qui reçoivent chacun un signal de correction $sg_k$ et délivrent en sortie les signaux de synchronisation $sy_k$. Les signaux de correction $sg_k$ sont élaborés dans des correcteurs $COR_k$ qui reçoivent, comme informations, les valeurs de la tension V et du courant I. Le signal de correction $sg_k$ délivré par chaque correcteur $COR_k$ est proportionnel au rang k du correcteur, à la fréquence F, à la variation de tension $V_0-V_1$ sur la période $1/_F$, et à la capacité du condensateur de même rang k, et inversement proportionnel à la valeur moyenne $\dfrac{I_0 + I_1}{2}$ du courant sur ladite période :

$$sg_k \text{ proportionnel à } \frac{4\,C_k.k.(V_0 - V_1)\,F}{(I_0 + I_1)\,n}$$

Ces valeurs des signaux de correction $sg_k$ assurent la répartition appropriée des signaux de commande $sc_k$ issus des logiques $LG_k$ et, en conséquence, la répartition précitée des tensions aux bornes des condensateurs et des interrupteurs.

Il est à noter que la correction qui est réalisée dans l'exemple ci-dessus au niveau des moyens de synchronisation SYNCHRO peut l'être également (avec un signe opposé) sur le signal de référence sr issu du générateur de pilotage ; les logiques $LG_k$ étant constituées par des comparateurs (suivi de circuits d'adaptation), les deux montages sont fonctionnellement équivalents et l'invention définie dans le cas de l'un ou l'autre des montages s'étend bien entendu à l'ensemble des deux.

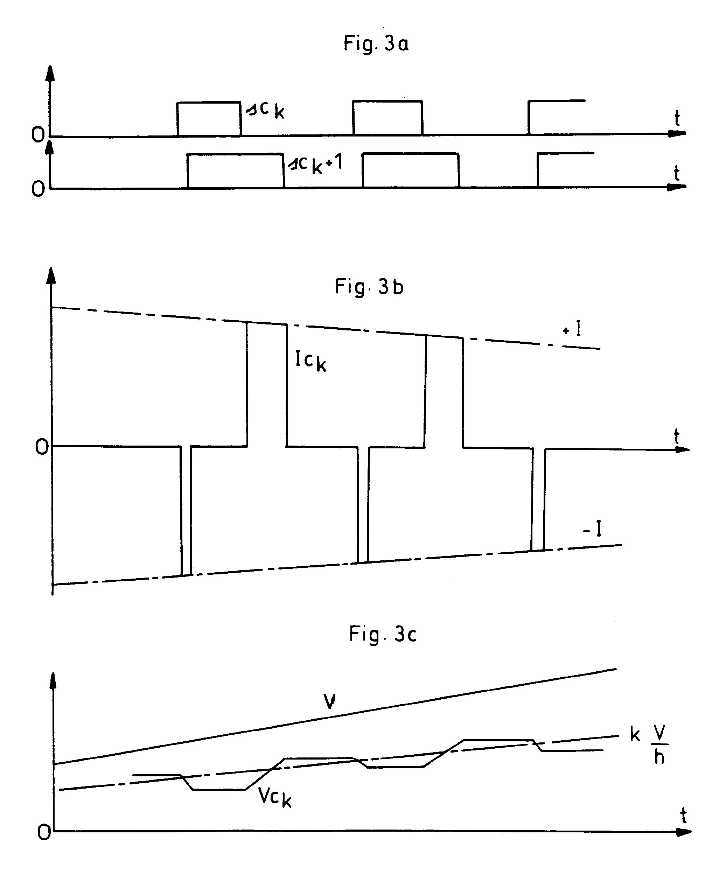

La figure 3a illustre l'allure de signaux de commande $sc_k$ et $sc_{k+1}$ délivrés par les logiques de commande $LG_k$ et $LG_{k+1}$ vers les deux cellules $CL_k$ et $CL_{k+1}$ (ces signaux représentent les états logiques $e_k$ et $e_{k+1}$ desdites cellules). Ces signaux de fréquence F sont décalés dans le temps et ont des durées différentes (en raison des termes correctifs introduits).

On a schématisé à la figure 3b l'allure du courant $I_{ck}$ dans le condensateur $C_k$, lequel prend alternativement les valeurs +I, 0, -I selon les positions relatives des fronts des signaux $sc_k$ et $sc_{k+1}$ (I : courant qui traverse la source de courant, supposé ici variable). La circulation de ce courant $I_{ck}$ dans le condensateur $C_k$ engendre

une variation de la tension $V_{ck}$ à ses bornes : l'allure de celle-ci est illustrée à la figure 3c. Sur une période $1/_F$, la progression de la tension $V_{ck}$ est proportionnelle à la variation de la tension V sur la même période et au rang k du condensateur : $V_{ck}$ demeure proche à tout instant de la valeur $kV/_n$.

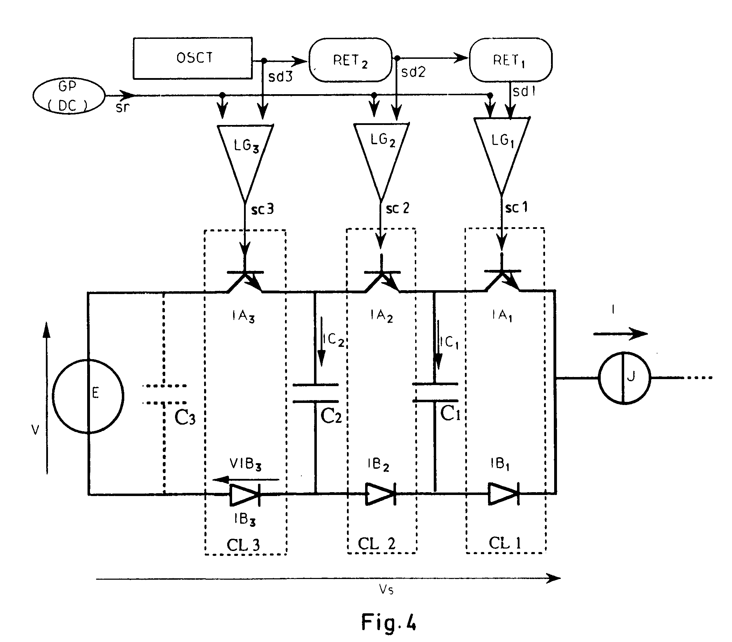

La figure 4 est un exemple de réalisation du dispositif précité dans le cas d'une source E de tension continue et d'une source J de courant continu (sur toutes les figures, aux fins de faciliter la compréhension, ont été reprises les mêmes références pour les éléments similaires).

Dans cet exemple qui comprend trois cellules de commutation, les interrupteurs $I_{A1}$, $I_{A2}$, $I_{A3}$ de la série A sont des interrupteurs de type commandable à l'amorçage et au blocage, en particulier transistor bipolaire (ou encore transistor Darlington, MOST, GTO, IGBT...). Les interrupteurs $I_{B1}$, $I_{B2}$, $I_{B3}$ de la série B sont des interrupteurs à double commutation spontanée, c'est-à-dire des diodes.

Dans cette application, les moyens de synchronisation sont adaptés de façon que les signaux de commande $sc_k$, $sc_{k+1}$ délivrés vers deux cellules de rangs successifs k et k+1 imposent à ces cellules des états logiques $e_k$ et $e_{k+1}$ tels que, si $e_k \neq e_{k+1}$, les durées cumulées pendant lesquelles $e_k$ ET $\overline{e}_{k+1} = 1$ soient sensiblement égales aux durées cumulées pendant lesquelles $\overline{e}_k$ ET $e_{k+1} = 1$.

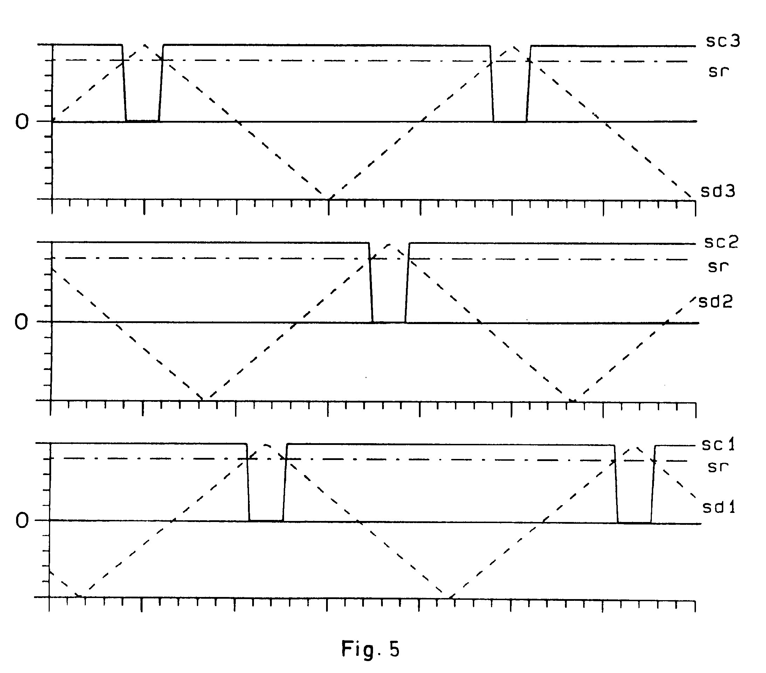

A cet effet, les moyens de synchronisation SYNCHRO comprennent des moyens de génération de signaux triangulaires déphasés, constitués en l'exemple représenté par un générateur de signaux triangulaires OSCT qui délivre un signal $sd_3$ de fréquence F dont l'allure est représentée à la figure 5, et par un déphaseur $RET_2$ dont la sortie est reliée à un autre déphaseur $RET_1$. Les déphaseurs introduisent un déphasage de 2 $M/_n$, soit en l'exemple 2 $M/_3$. Les signaux issus du générateur OSCT ($sd_3$), du déphaseur $RET_2$ ($sd_2$) et du déphaseur $RET_1$ ($sd_1$) ont des phases relatives de 0, 2 $M/_3$ et 4 $M/_3$ et sont délivrés respectivement vers les comparateurs des logiques de commande $LG_3$, $LG_2$, $LG_1$. Le générateur de pilotage GP délivre comme précédemment le signal de référence sr vers l'autre entrée des comparateurs. Dans l'application continu/continu, le signal sr est continu et varie en fonction de l'échange d'énergie désirée.

A la sortie des comparateurs $LG_3$, $LG_2$, $LG_1$, apparaissent les trois signaux de commande $sc_3$, $sc_2$, $sc_1$ constitués par des signaux logiques, de valeur 1 lorsque $sd_k < sr$ et de valeur 0 dans le cas contraire.

Ces signaux sont délivrés après adaptation sur l'électrode de commande des interrupteurs $I_{A3}$, $I_{A2}$, $I_{A1}$.

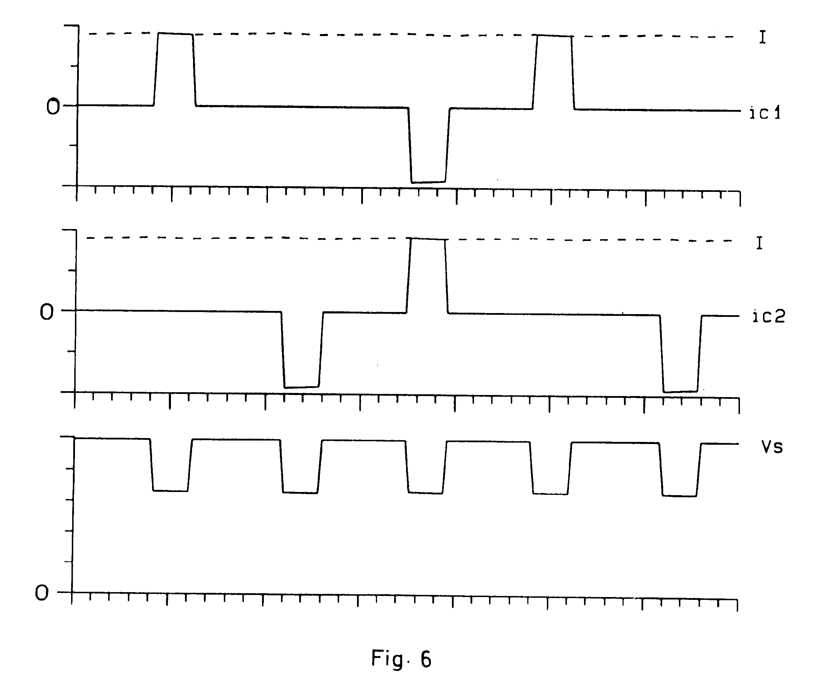

La figure 6 présente l'allure des courants $ic_1$, $ic_2$ qui traversent les condensateurs $C_1$ et $C_2$ (la source de tension E supposée parfaite joue le rôle de condensateur $C_3$). On peut vérifier que, lorsque deux cellules successives sont dans des états $e_k$ et $e_{k+1}$ différents, il y a circulation du courant I de la source J dans un sens ou dans l'autre, à travers le condensateur situé entre les deux cellules concernées ; au contraire le courant dans ce condensateur est nul lorsque les deux cellules sont dans des états identiques.

Le dernier diagramme de la figure 6 présente la tension de sortie $V_s$ ; cette tension possède une ondulation de fréquence 3F et d'amplitude $E/_3$ : ces deux conditions facilitent le filtrage de cette tension.

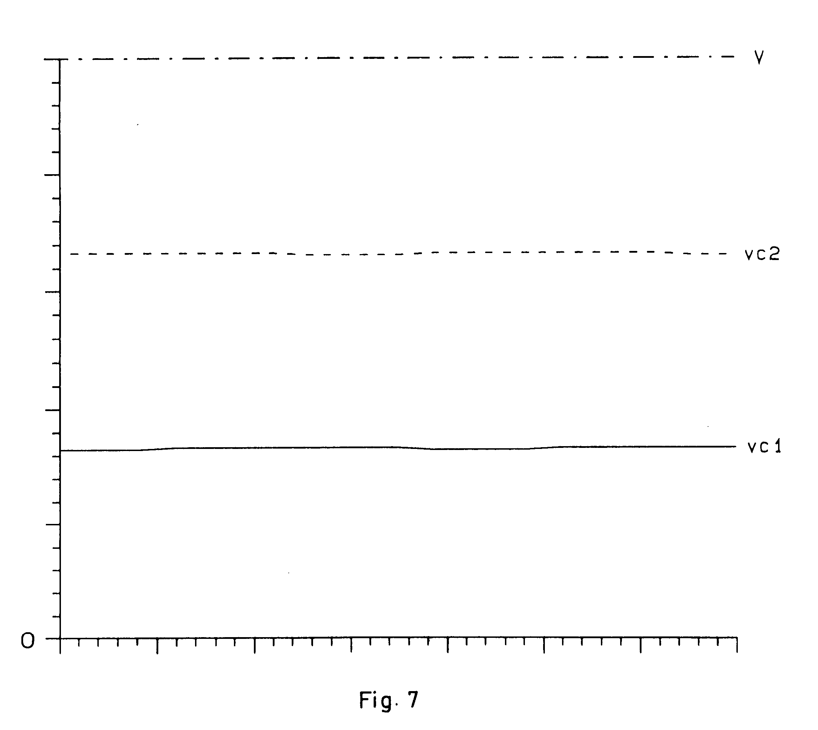

La figure 7 illustre l'équilibrage des tensions $V_{c1}$ et $V_{c2}$ aux bornes des condensateurs $C_1$ et $C_2$ par comparaison à la tension continue V aux bornes de la source de tension E. On vérifie que la tension $V_{ck}$ aux bornes d'un condensateur k est sensiblement égale à $kV/_n$ (ici $kV/_3$).

La tension aux bornes d'un interrupteur $I_{AK}$ ou $I_{BK}$ ($V_{IAK}$ ou $V_{IBK}$) est soit nulle soit égale à la différence des tensions aux bornes des deux condensateurs $C_{k-1}$ $C_k$ qui l'encadrent. Il s'ensuit que cette tension est limitée à $V/_n$ (ici $V/_3$).

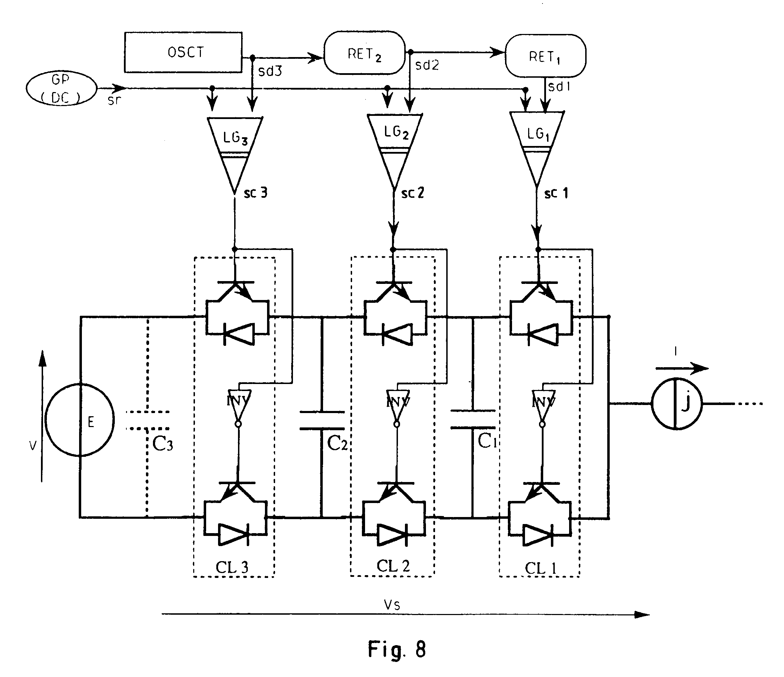

La figure 8 est un exemple de réalisation du dispositif dans le cas d'une source E de tension continue et d'une source J de courant alternatif symétrique de fréquence fi (la fréquence F des commutations étant notablement supérieure à cette fréquence fi). Cet exemple correspond à un onduleur de tension (convertisseur continu/alternatif) ou, compte tenu de la réversibilité, à un redresseur de courant (convertisseur alternatif/continu).

Dans l'exemple représenté qui comprend également trois cellules (mais qui peut être généralisé à n cellules) tous les interrupteurs $I_{A1}$, $I_{A2}$, $I_{A3}$, $I_{B1}$, $I_{B2}$, $I_{B3}$ sont de même type, réversibles en courant et unidirectionnels en tension ; à la figure 8, ils sont constitués par des transistors bipolaires doublés chacun d'une diode en antiparallèle ; chacun de ces transistors bipolaires peut être remplacé selon les applications par un transistor Darlington, MOST, GTO, IGBT...

Dans cette application, les moyens de synchronisation SYNCHRO sont adaptés de façon que les signaux de commande $sc_k$, $sc_{k+1}$ délivrés vers deux cellules $CL_k$, $CL_{k+1}$ de rangs successifs k et k+1 imposent à ces cellules des états logiques $e_k$ et $e_{k+1}$ tels que :

. la grandeur logique $e_k$ ET $\overline{e}_{k+1}$ soit périodique, de fréquence 2 fi, double de la fréquence de la source de courant J,

. la grandeur logique $\overline{e}_k$ ET $e_{k+1}$ soit également périodique, avec la même fréquence 2 fi.

A cet effet, les moyens de pilotage GP sont adaptés pour délivrer un signal de référence sr alternatif symétrique de fréquence fi ; de plus les moyens de synchronisation comprennent des moyens de génération de signaux triangulaires alternatifs symétriques $sd_k$, composés en l'exemple de n générateurs OSCT, $RET_2$, $RET_1$,

correspondant aux -n- cellules et affectés du même rang, les générateurs présentant une même amplitude et une même fréquence -F- multiple de la fréquence fi pour délivrer des signaux triangulaires décalés dans le temps de sorte que le signal $sd_{k+1}$ issu du générateur de rang k+1 soit retardé dans le temps d'une valeur $1/_{nF}$ par rapport à celui $sd_k$ issu du générateur de rang k.

Les n logiques $LG_k$ sont constituées chacune par un comparateur relié aux moyens de pilotage GP et à un générateur de signaux triangulaires, le comparateur qui est relié au générateur de rang k étant connecté à la cellule de commutation de rang k pour commander celle-ci en fonction des valeurs relatives des deux signaux $(sd_k, sr)$ qu'il reçoit.

Comme précédemment, les générateurs de signaux triangulaires peuvent être constitués par un oscillateur OSCT et par une succession de déphaseurs $RET_k$ 2 $M/_n$ de façon à délivrer des signaux triangulaires décalés de 2 $M/_n$ pour un signal par rapport au suivant.

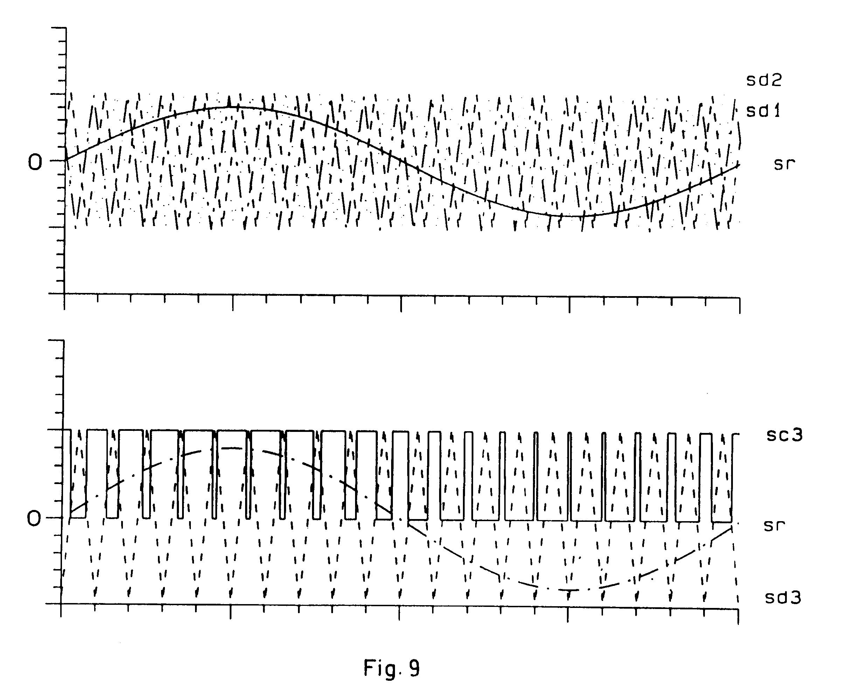

A la sortie des comparateurs $LG_3$, $LG_2$, $LG_1$ des logiques de commande, apparaissent des signaux de commande $sc_3$, $sc_2$, $sc_1$ qui ont des caractéristiques similaires à celles déjà décrites précédemment. Ces signaux qui sont représentés à la figure 9 sont délivrés vers les interrupteurs $I_{A3}$, $I_{A2}$ et $I_{A1}$. Les conditions déjà évoquées dans le mode de réalisation précédent se vérifient dans le cas visé. Après inversion et isolement galvanique dans des circuits $INV_k$, ces signaux assurent la commande des trois autres interrupteurs $IB_3$, $IB_2$, $IB_1$.

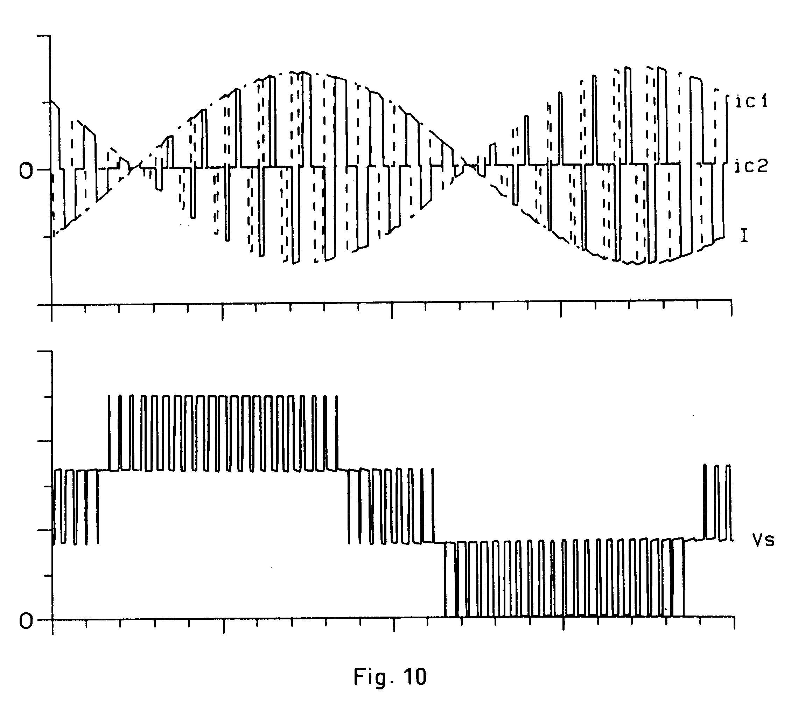

La figure 10 présente l'allure des courants qui traversent les condensateurs $C_1$ et $C_2$. Les mêmes commentaires que dans le cas précédent peuvent être formulés. Le dernier diagramme de la figure 10 présente la tension de sortie $V_s$ : comme précédemment, cette tension possède une ondulation de fréquence nF et d'amplitude $E/_n$ (n=3 dans le cas représenté de trois cellules).

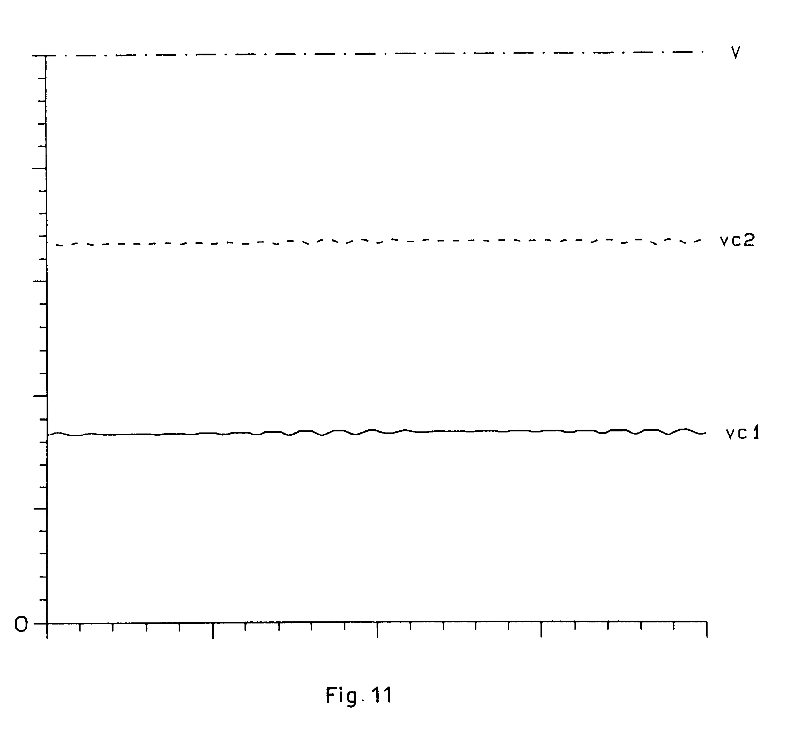

La figure 11 illustre l'équilibrage des tensions aux bornes des condensateurs : la tension $V_{ck}$ aux bornes du condensateur de rang k est sensiblement égale à $kV/_n$. En outre, dans ce cas également, la tension aux bornes d'un interrupteur est limitée à $V/_n$ (ici $V/_3$).

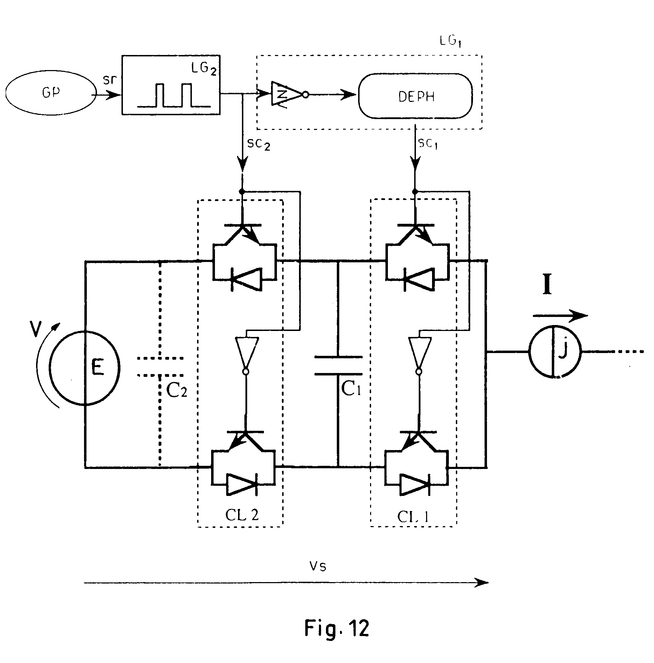

La figure 12 représente une variante du dispositif représenté à la figure 8 (source de tension E continue et source de courant alternatif symétrique de fréquence fi). Dans le dispositif de la figure 12, le nombre n de cellules est égal à 2 et la fréquence de commutation F est égale à la fréquence fi de la source de courant. La partie puissance du dispositif est similaire à celle de la figure 8 ; le signal de référence sr issu du générateur de pilotage est traité dans la logique de commande $LG_2$ associé à la deuxième cellule de façon à délivrer un signal de commande $sc_2$ de fréquence fi. Cette logique de commande $LG_2$ peut par exemple être constituée par une mémoire stockant des motifs prédéfinis de commande qui sont lus à la fréquence F = fi et sélectionnés en fonction du signal sr. Ce signal qui sert à commander la cellule $CL_2$ (après inversion pour l'interrupteur de la série B) est reçu par la logique $LG_1$ attachée à la cellule $CL_1$ en vue de délivrer un signal de commande $sc_1$ vers ladite cellule $CL_1$. Les signaux de commande $sc_1$ et $sc_2$ imposent à ces cellules des états logiques $e_1$ et $e_2$ tels que $e_2$ est obtenu en complémentant $e_1$ et en le décalant d'une demi-période $1/_{2F}$.

A cet effet, la logique $LG_1$ peut en particulier être constituée par un inverseur suivi d'un déphaseur DEPH de M. Le cas échéant, le signal $sc_1$ peut être stocké (comme le signal $sc_2$) dans une mémoire pour être lu à la fréquence F = fi.

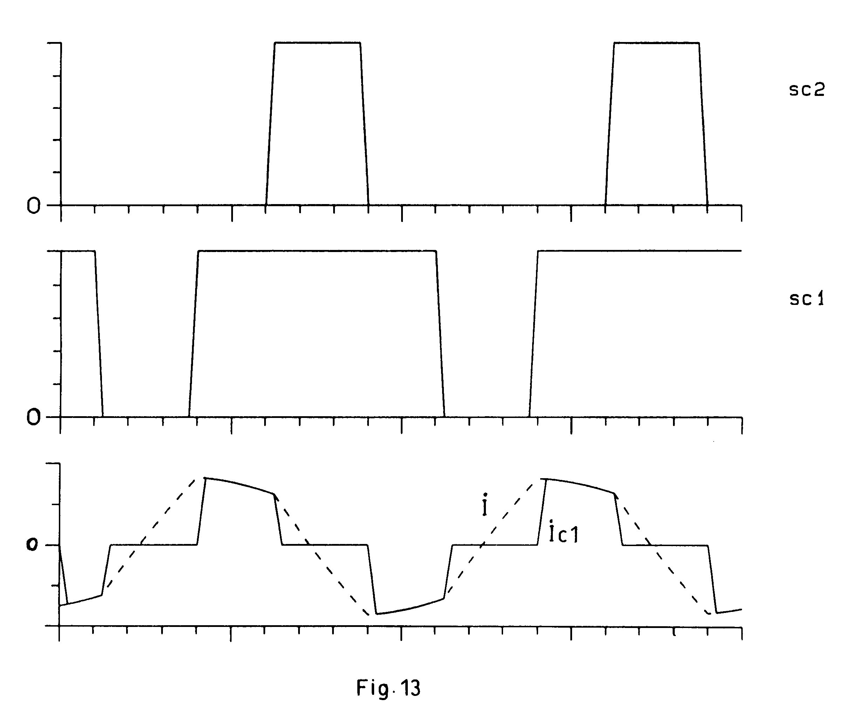

La figure 13 illustre les signaux de commande $sc_2$ et $sc_1$ ; le dernier diagramme de cette figure illustre en traits discontinus le courant I de la source J et en traits continus le courant $I_{c1}$ circulant dans le condensateur $C_1$ ; on note que ce courant présente une valeur moyenne nulle.

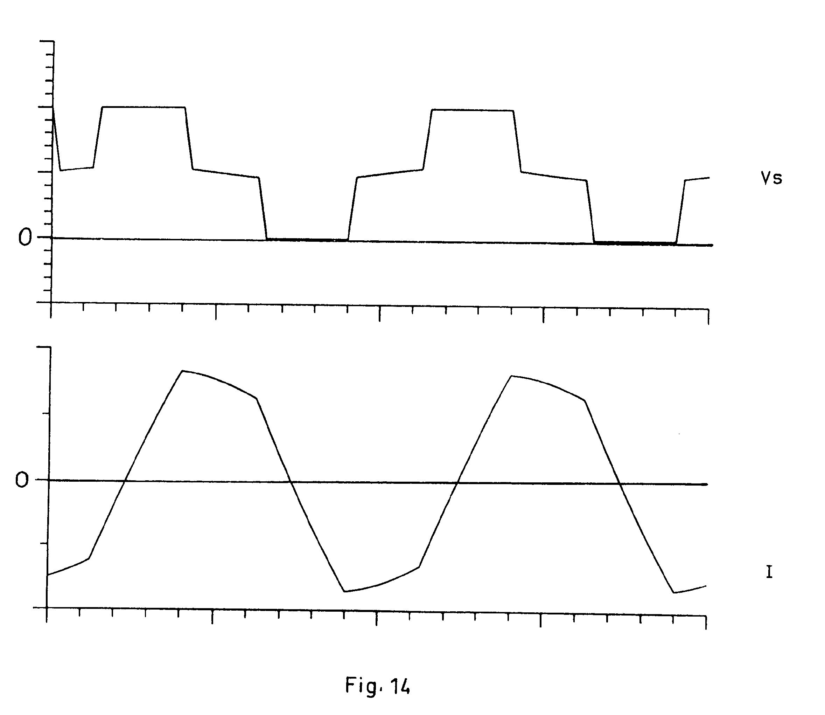

La figure 14 illustre l'allure de la tension $V_s$ de sortie du système (qui est une tension à trois niveaux) ; la tension $V_{c1}$ aux bornes du condensateur $C_1$ est donc sensiblement égale à $V/_2$ et la tension aux bornes de l'interrupteur $I_{A1}$ est limitée à $V/_2$.

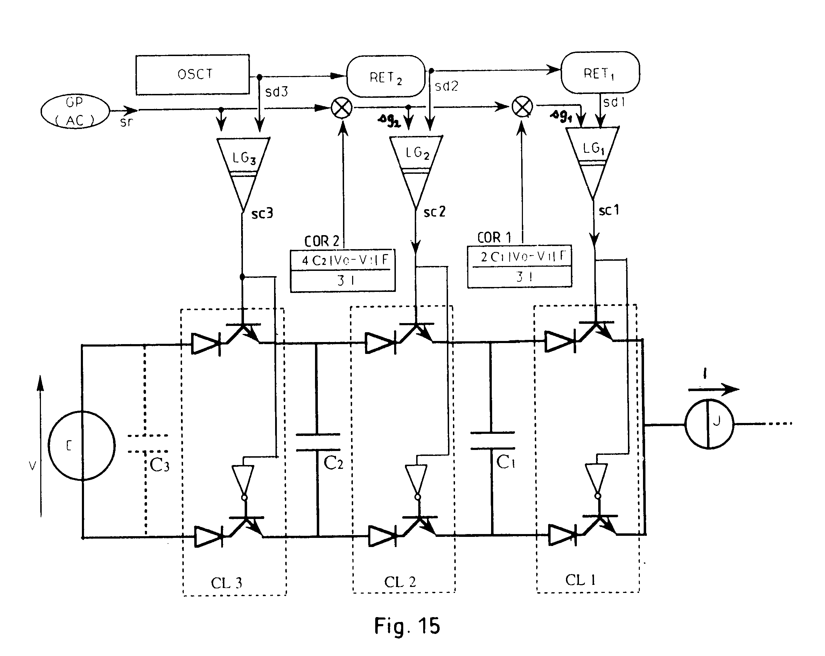

La figure 15 est un exemple de réalisation du dispositif dans le cas d'une source E de tension alternative symétrique de fréquence fv et d'une source J de courant continu (la fréquence F des commutations étant notablement supérieure à cette fréquence fv). Cet exemple correspond à un convertisseur alternatif/continu et/ou continu/alternatif (redresseur ou onduleur de courant réversible).

Dans l'exemple représenté qui comprend trois cellules (mais qui peut être généralisé à n cellules), tous les interrupteurs $I_{A1}$, $I_{A2}$, $I_{A3}$, $I_{B1}$, $I_{B2}$, $I_{B3}$ sont de même type, réversibles en tension et unidirectionnels en courant ; à la figure 15, ils sont constitués par des transistors bipolaires disposés chacun en série avec une diode ; chacun de ces transistors peut être remplacé selon les applications par un transistor Darlington, MOST, GTO (ne nécessitant pas nécessairement une diode série), IGBT...

Dans cette application, les moyens de synchronisation sont adaptés de façon que les signaux de commande $sc_k$, $sc_{k+1}$ délivrés vers deux cellules $CL_k$, $CL_{k+1}$ de rangs successifs k et k+1 imposent à ces cellules des états logiques $e_k$ et $e_{k+1}$ tels que, sur chaque période $1/_F$, la différence entre la durée de l'état $\overline{e}_k$ ET $e_{k+1} = 1$ et la durée de l'état $e_k$ ET $\overline{e}_{k+1} = 1$ soit sensiblement égale à

$$\frac{c_k}{I} \cdot \frac{k}{n} \; \left| \; V_0 - V_1 \; \right|$$

où

$c_k$ est la capacité du condensateur de rang k,

I est la valeur du courant de la source de courant,

$V_0$ est la tension aux bornes de la source de tension au début de la période $1/_F$ considérée et $V_1$ cette tension à la fin de ladite période.

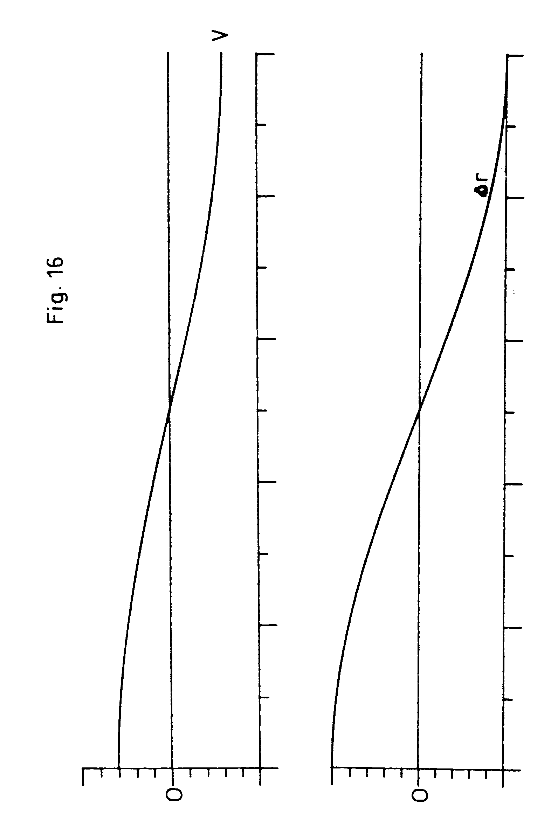

A cet effet, les moyens de pilotage sont adaptés pour délivrer un signal de référence sr alternatif symétrique de fréquence fv, qui est illustré à la figure 16 ; de plus les moyens de synchronisation SYNCHRO comprennent :

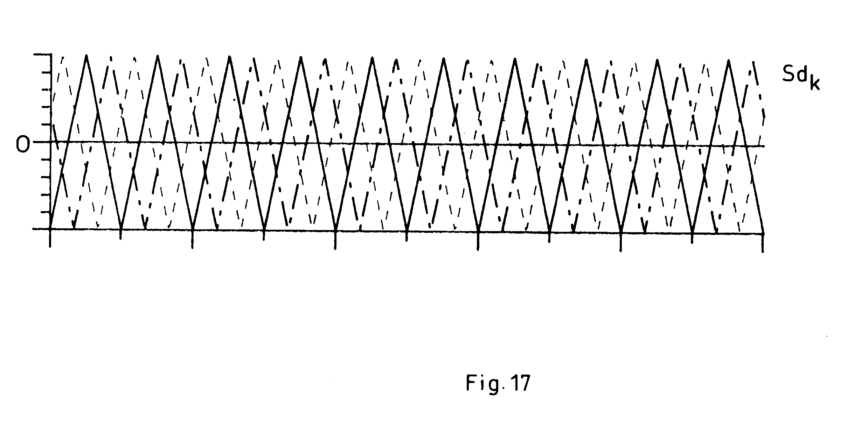

. des moyens de génération de n signaux triangulaires alternatifs symétriques $sd_k$, composés en l'exemple de n générateurs OSCT, $RET_2$, $RET_1$, correspondant aux -n- cellules et affectés du même rang, les générateurs présentant une même amplitude et une même fréquence -F- multiple de la fréquence fv pour délivrer des signaux triangulaires décalés dans le temps de sorte que le signal $sd_{k+1}$ issu du générateur de rang k+1 soit retardé dans le temps d'une valeur $1/_{nF}$ par rapport au signal $sd_k$ issu du générateur de rang k (figure 17),

. des correcteurs $COR_k$, correspondant aux cellules et affectés du même rang, chaque correcteur étant relié aux moyens de pilotage et adapté pour délivrer un signal de référence corrigé $sg_k$ d'amplitude relative $g_k$ par rapport à celle des signaux triangulaires $sd_k$, telle que

$$\left| \; g_k - g_{k+1} \; \right| = 2 \, \frac{c_k}{I} \cdot \frac{k}{n} \; \left| \; V_0 - V_1 \; \right| \cdot F$$

Les n logiques $LG_k$ sont chacune constituées par un comparateur recevant un signal triangulaire $sd_k$ et recevant un signal de référence corrigé $sg_k$, le comparateur qui est relié au générateur de rang k étant connecté à la cellule de commutation de rang k pour commander celle-ci en fonction des valeurs relatives des deux signaux $sd_k$, $sg_k$ qu'il reçoit.

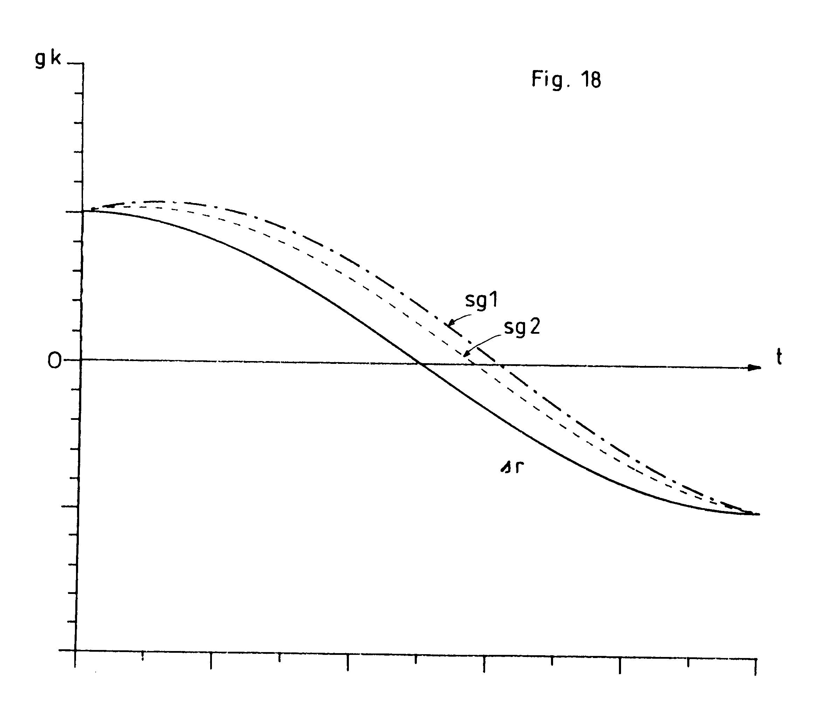

Les signaux de référence corrigés $sg_k$ sont illustrés à la figure 18.

Comme précédemment, les générateurs de signaux triangulaires peuvent être constitués par un oscillateur OSCT et par une succession de déphaseurs $RET_k$ 2 $M/_n$ de façon à délivrer des signaux triangulaires décalés de 2 $M/_n$ pour un signal par rapport au suivant.

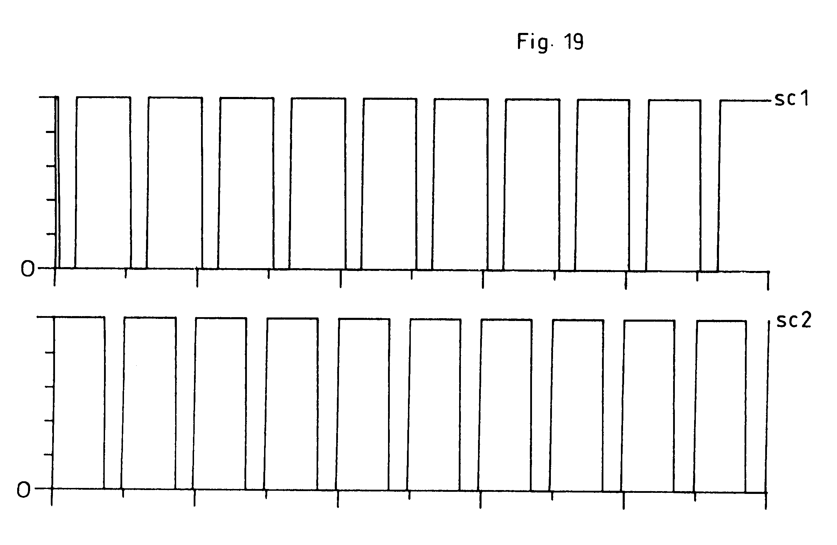

A la sortie des comparateurs $LG_3$, $LG_2$, $LG_1$ des logiques de commande, apparaissent des signaux de commande $sc_3$, $sc_2$, $sc_1$ qui ont des caractéristiques similaires à celles déjà décrites précédemment. Ces signaux qui sont représentés à la figure 19 sont délivrés vers les interrupteurs $I_{A3}$, $I_{A2}$ et $I_{A1}$. Les conditions déjà évoquées dans les modes de réalisation précédents se vérifient dans le cas visé. Après inversion et isolement galvanique dans des circuits $INV_k$, ces signaux assurent la commande des trois autres interrupteurs $I_{B3}$, $I_{B2}$, $I_{B1}$.

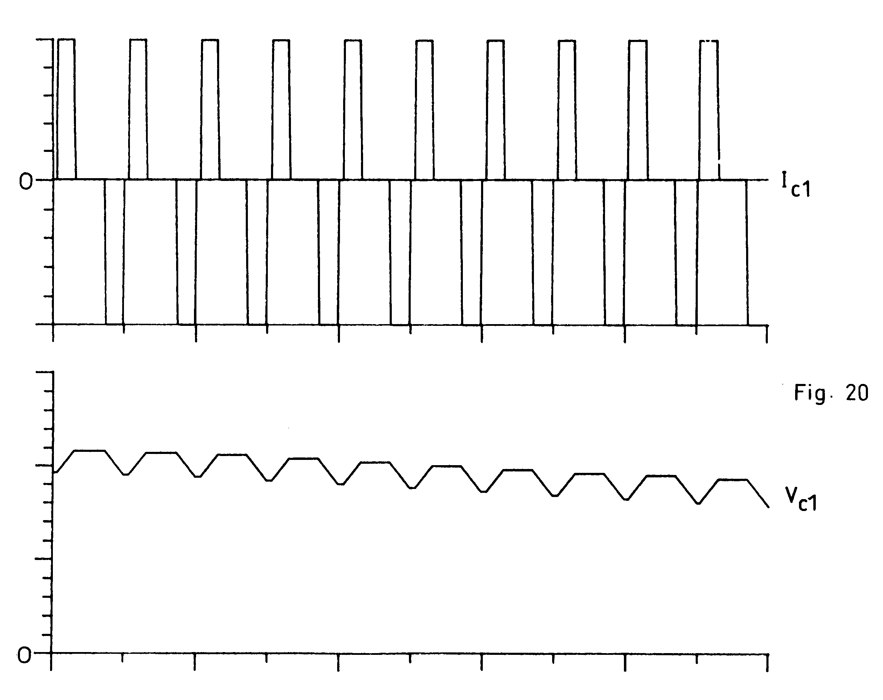

La figure 20 présente l'allure du courant $I_{c1}$ qui traverse le condensateur $C_1$ et celle de la tension $V_{c1}$ à ses bornes.

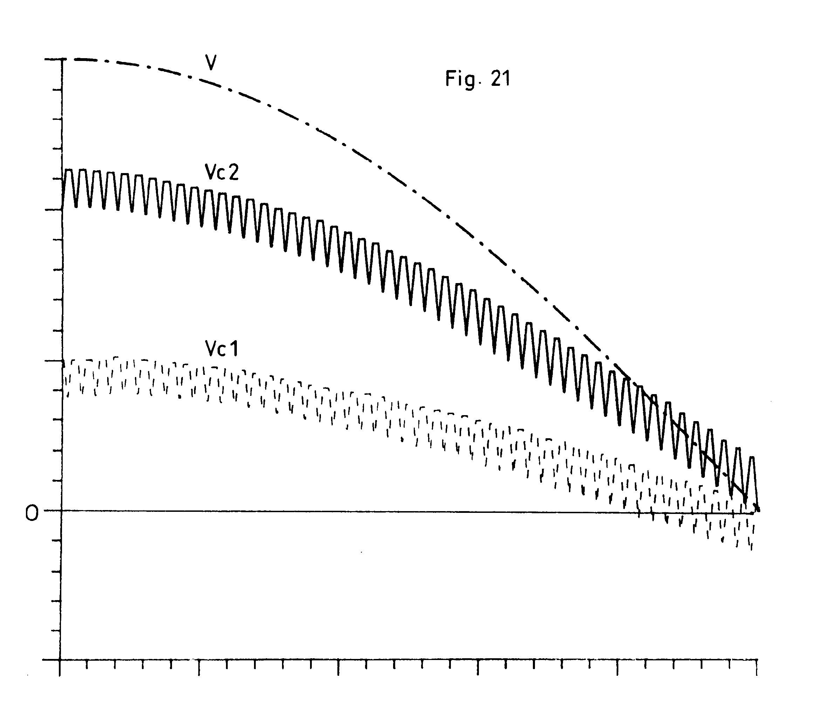

Il est à noter que ce courant $I_{c1}$ présente une valeur moyenne non nulle, appropriée pour provoquer une variation de la tension $V_{c1}$ proportionnelle à la variation de la tension V aux bornes de la source E. La variation macroscopique de la tension $V_{c1}$ est mieux illustrée à la figure 21. Cette figure montre aussi que les tensions $V_{ck}$ aux bornes des condensateurs varient proportionnellement à leur rang k.

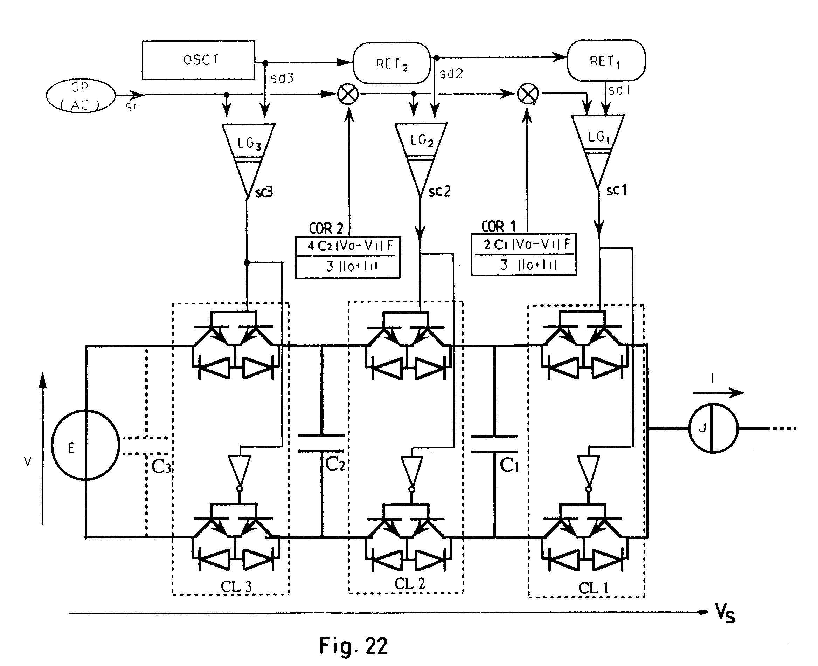

La figure 22 est un exemple de réalisation du dispositif dans le cas d'une source E de tension alternative symétrique de fréquence fv et d'une source J de courant alternatif symétrique de fréquence fi (la fréquence F des commutations étant notablement supérieure aux fréquence fi et fv). Cet exemple correspond à un convertisseur alternatif/alternatif (par exemple convertisseur changeur de fréquence parfois désigné par "cycloconvertisseur").

Dans l'exemple représenté qui comprend trois cellules (mais qui peut être généralisé à n cellules), tous les interrupteurs $I_{A1}$, $I_{A2}$, $I_{A3}$, $I_{B1}$, $I_{B2}$, $I_{B3}$ sont de même type, réversibles en tension et en courant ; à la figure 22, ils sont constitués par des transistors bipolaires associés par paire en anti-série, chacun étant doté d'une diode en anti-parallèle ; chacun de ces transistors peut être remplacé selon les applications par un transistor Darlington, MOST (la diode pouvant être la diode interne du MOST), GTO, IGBT...

Dans cette application, les moyens de synchronisation SYNCHRO sont adaptés de façon que les signaux de commande $sc_K$, $sc_{k+1}$ délivrés vers deux cellules $CL_k$, $CL_{k+1}$ de rangs successifs k et k+1 imposent à ces cellules des états logiques $e_k$ et $e_{k+1}$ tels que, sur chaque période $1/_F$, la différence entre la durée de l'état $\overline{e_k}$ ET $e_{k+1}$ = 1 et la durée de l'état $e_k$ ET $\overline{e_{k+1}}$ = 1 soit sensiblement égale à

$$2c_k \cdot \frac{k}{n} \cdot \frac{V_0 - V_1}{I_0 + I_1}$$

où $c_k$ est la capacité du condensateur de rang k,

$I_0$ et $V_0$ sont les valeurs des sources de courant et de tension au début de la période $1/_F$ considérée,

et $I_1$ et $V_1$ ces valeurs à la fin de ladite période.

Les moyens de pilotage GP délivrent un signal de référence sr adapté pour piloter les échanges d'énergie ; dans l'exemple représenté, ce signal de référence est alternatif de fréquence fv. Les moyens de synchronisation SYNCHRO comprennent :

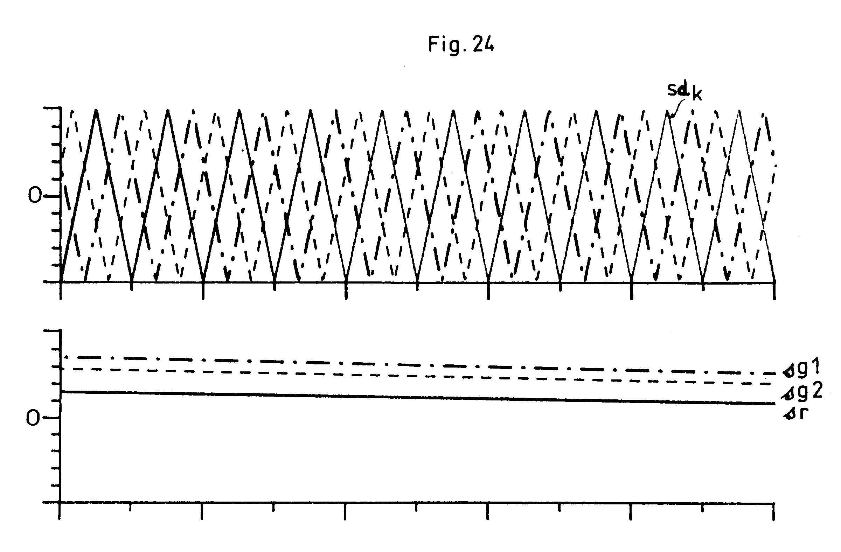

. des moyens de génération de signaux triangulaires alternatifs symétriques $sd_k$, constitués en l'exemple par n générateurs OSCT, $RET_2$, $RET_1$, correspondant aux -n- cellules et affectés du même rang, les générateurs présentant une même amplitude et une même fréquence -F- (notablement supérieures aux fréquences fi et fv), lesdits générateurs étant décalés dans le temps de sorte que le signal triangulaire $sd_{k+1}$ issu du générateur de rang k+1 soit retardé dans le temps d'une valeur $1/_{nF}$ par rapport au signal $sd_k$ issu du générateur de rang k (figure 24),

. des correcteurs $COR_k$, correspondant aux cellules et affectés du même rang, chaque correcteur étant relié aux moyens de pilotage GP et adapté pour délivrer un signal de référence corrigé $sg_k$ d'amplitude relative $g_k$ par rapport à celle des signaux triangulaires $sd_k$, telle que

$$\left| g_k - g_{k+1} \right| = \frac{4c_k}{I_0 + I_1} \cdot \frac{k}{n} \left| V_0 - V_1 \right| \cdot F$$

Les n logiques $LG_k$ sont chacune constituées par un comparateur recevant un signal triangulaire $sd_k$ et un signal de référence corrigé $sg_k$, le comparateur qui est relié au générateur de rang k étant connecté à la cellule de commutation $CL_k$ de rang k pour commander celle-ci en fonction des valeurs relatives des deux signaux $sd_k$, $sg_k$ qu'il reçoit.

Les signaux triangulaires $sd_k$ issus des générateurs et les signaux de référence corrigés $sg_k$ sont illustrés à la figure 24.

Comme précédemment, les générateurs de signaux triangulaires peuvent être constitués par un oscillateur OSCT et par une succession de déphaseurs $RET_k$ 2 $M/_n$ de façon à délivrer des signaux triangulaires décalés de 2 $M/_n$ pour un signal par rapport au suivant.

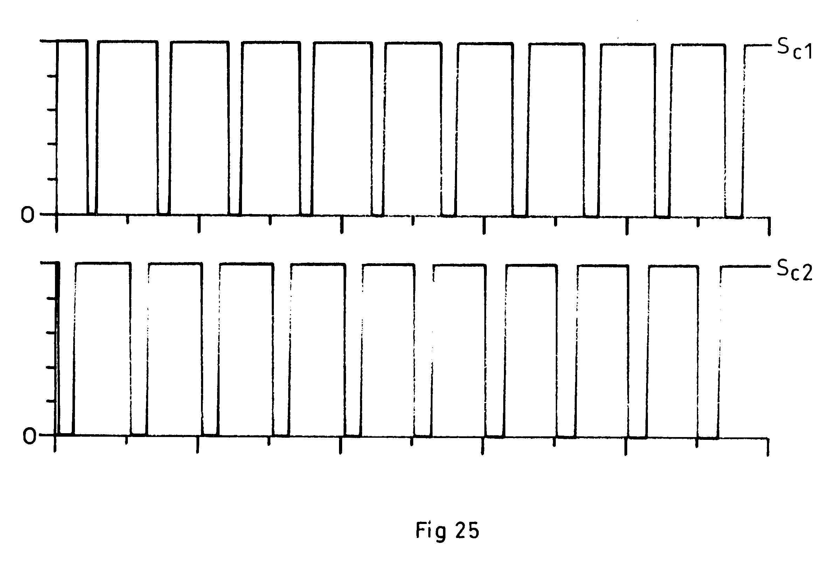

A la sortie des comparateurs $LG_3$, $LG_2$, $LG_1$ des logiques de commande, apparaissent des signaux de commande $sc_1$, $sc_2$, $sc_3$ qui ont des caractéristiques similaires à celles déjà décrites précédemment. Ces signaux qui sont représentés à la figure 25 sont délivrés vers les interrupteurs $I_{A3}$, $I_{A2}$ et $I_{A1}$. Les conditions déjà évoquées dans les modes de réalisation précédents se vérifient dans le cas visé. Après inversion et isolement galvanique dans des circuits $INV_k$, ces signaux assurent la commande des trois autres interrupteurs $I_{B3}$, $I_{B2}$, $I_{B1}$.

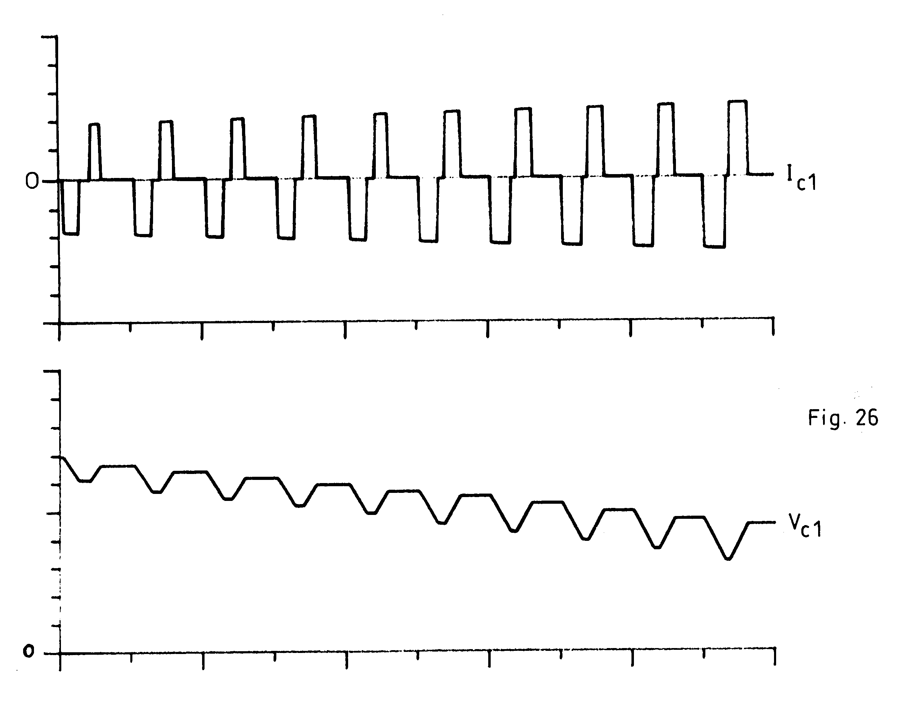

La figure 26 présente l'allure du courant $I_{c1}$ qui traverse le condensateur $C_1$ et celle de la tension $V_{c1}$ à ses bornes.

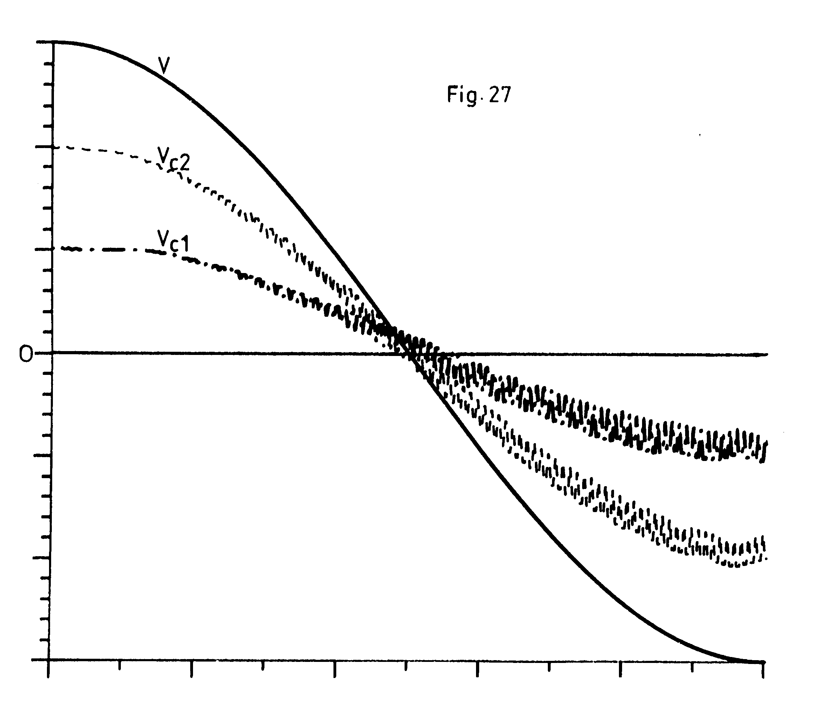

Il est à noter que ce courant $I_{c1}$ présente une valeur moyenne non nulle, appropriée pour provoquer une variation de la tension $V_{c1}$ proportionnelle à la variation de la tension V aux bornes de la source E. La variation macroscopique de la tension $V_{c1}$ est mieux illustrée sur la figure 27. Cette figure montre aussi que les tensions $V_{ck}$ aux bornes des condensateurs varient proportionnellement à leur rang k.

## Revendications

1. Dispositif électronique de conversion d'énergie électrique entre une source de tension et une source de courant :

. comprenant -n- cellules de commutation commandables ($CL_1$... $CL_k$... $CL_n$) comportant chacune deux interrupteurs ($I_{Ak}$, $I_{Bk}$) avec n $\geqq$ 2, chaque cellule étant repérée par un rang k avec 1 $\leqq$ k $\leqq$ n,

. une logique de commande ($LG_k$) étant connectée à chaque cellule de commutation ($CL_k$) pour lui dé-

livrer des signaux de commande ($sc_k$) de fréquence F, aptes à assurer des commutations opposées des deux interrupteurs de la cellule,

. des moyens de pilotage (GP) adaptés pour délivrer vers les logiques de commande un signal de référence (sr) fonction de la conversion d'énergie désirée,

. -n- interrupteurs homologues des cellules étant connectés en série et les -n- autres interrupteurs homologues étant eux-mêmes connectés en série, de façon à réaliser deux séries symétriques, dites série A et série B, dans lesquelles les deux interrupteurs ($I_{Ak}$, $I_{Bk}$) d'une même cellule occupent des positions symétriques par rapport à la source de courant,

. les deux séries A et B d'interrupteurs étant interconnectées, d'une part, par une extrémité commune, à la source de courant (J), d'autre part, par leurs extrémités opposées, à la source de tension (E), le rang k affecté aux cellules croissant depuis la cellule ($CL_1$) dont les interrupteurs sont directement connectés à la source de courant (k = 1) jusqu'à la cellule ($CL_n$) dont les interrupteurs sont directement connectés à la source de tension (k = n),

ledit dispositif de conversion étant caractérisé en ce que :

. des condensateurs ($c_k$) sont associés aux cellules de commutation ($CL_k$) de façon que les bornes symétriques des deux interrupteurs ($I_{Ak}$, $I_{Bk}$) de chaque cellule soient reliées entre elles à travers un condensateur en vue de maintenir entre lesdites bornes une tension, dite tension de charge du condensateur, et d'assurer une circulation alternée de courant d'un interrupteur vers l'autre interrupteur de la cellule,

. les logiques de commande ($LG_k$) des -n- cellules de commutation sont synchronisées pour répartir dans le temps leurs signaux de commande ($sc_k$) de sorte que le courant circulant dans chaque condensateur ($c_k$) présente, sur une période $1/_F$, une valeur moyenne sensiblement proportionnelle à la variation de la tension aux bornes de la source de tension sur cette même période, et en particulier sensiblement nulle pour une source de tension continue.

2. Dispositif selon la revendication 1, caractérisé en ce que chaque condensateur ($c_k$) associé à une cellule de commutation ($CL_k$) présente une tenue en tension supérieure à un seuil $V_{ck}$ fonction croissante du rang k de la cellule à laquelle est associé ledit condensateur, avec $V_{ck} = k.Vm_{/n}$ où Vm est la tension maximale de la source de tension (E).

3. Dispositif selon l'une des revendications 1 ou 2, caractérisé en ce que chaque condensateur ($c_k$) associé à la cellule de commutation ($CL_k$) de rang k est dimensionné pour présenter une capacité $c_k$ suffisante pour que les variations de tension aux bornes dudit condensateur soient inférieures à $0,2.V_{/n}$, où V est la tension de la source de tension (E).

4. Dispositif selon l'une des revendications 1, 2 ou 3, dans lequel les interrupteurs ($I_{Ak}$, $I_{Bk}$) des cellules de commutation ($CL_k$) sont des interrupteurs statiques à semi-conducteurs, possédant une réversibilité en tension identique à celle de la source de tension (E) et une réversibilité en courant identique à celle de la source de courant (J).

5. Dispositif selon l'une des revendications 1, 2, 3 ou 4, caractérisé en ce que les logiques de commande ($LG_K$) sont reliées à des moyens de synchronisation (SYNCHRO) comprenant un oscillateur (OSC) de fréquence F, une succession de circuits retards ($RET_k$) délivrant un système de signaux ($sd_k$) décalés pour deux signaux successifs d'un écart temporel égal à $1/_{nF}$, des correcteurs ($COR_k$) délivrant des signaux de correction ($sg_k$) proportionnels au rang k du correcteur, à la frequence F, à la variation de tension $V_0-V_1$ sur la période $1/_F$, et à la capacité du condensateur de même rang k, et inversement proportionnel à la valeur moyenne $\frac{I_0 + I_1}{2}$ du courant sur ladite période, et des sommateurs ($SM_k$) en vue de délivrer des signaux de synchronisation ($sy_k$) à partir des signaux décalés ($sd_k$) et signaux de correction ($sg_k$), chaque logique de commande comprenant un comparateur recevant, d'une part, le signal de référence (sr) issu des moyens de pilotage (GP), d'autre part, le signal de synchronisation ($sy_k$) de rang k correspondant issu des moyens de synchronisation (SYNCHRO).

6. Dispositif selon l'une des revendications 1, 2, 3, 4 ou 5, connecté à une source de tension continue et à une source de courant continu, en vue de réaliser un convertisseur continu/continu, dans lequel chaque cellule de commutation ($CL_k$) comprend, d'une part, un interrupteur ($I_{Ak}$) du type commandable à l'amorçage et au blocage, d'autre part, un interrupteur ($I_{Bk}$) à double commutation spontanée.

**7.** Dispositif selon la revendication 6, caractérisé en ce que les logiques de commande ($LG_k$) des -n- cellules de commutation sont synchronisées de façon que les signaux de commande ($sc_k$, $sc_{k+1}$) délivrés vers deux cellules ($CL_k$, $CL_{k+1}$) de rangs successifs k et k+1 imposent à ces cellules des états logiques $e_k$ et $e_{k+1}$ tels que, si $e_k \neq e_{k+1}$, les durées cumulées pendant lesquelles $e_k$ ET $\overline{e}_{k+1} = 1$ soient sensiblement égales aux durées cumulées pendant lesquelles $\overline{e}_k$ ET $e_{k+1} = 1$, l'état logique $e_k$ d'une cellule ($CL_k$) étant défini comme égal à 1 lorsque l'interrupteur ($I_{Ak}$) de la cellule faisant partie de la série A est passant (l'autre interrupteur ($I_{Bk}$) de la cellule, de la série B, étant bloqué), et égal à 0 lorsque l'interrupteur ($I_{Ak}$) de ladite série A est bloqué (l'autre interrupteur ($I_{Bk}$) de la cellule, de la série B, étant passant).

**8.** Dispositif selon la revendication 7, caractérisé en ce que les logiques de commande ($LG_k$) des -n- cellules de commutation sont reliées à des moyens de synchronisation (SYNCHRO) comprenant des moyens de génération de signaux triangulaires déphasés ($OSCT$, $RET_2$, $RET_1$), aptes à délivrer des signaux ($sd_3$, $sd_2$, $sd_1$) commande de même fréquence -F- déphasés de $2 M_{/n}$ pour un signal par rapport au suivant.

**9.** Dispositif selon l'une des revendications 1, 2, 3, 4 ou 5, connecté à une source de tension continue et à une source de courant alternatif symétrique en vue de réaliser un convertisseur continu/alternatif et/ou alternatif/continu, dans lequel chaque cellule de commutation ($CL_k$) comprend deux interrupteurs identiques ($I_{Ak}$, $I_{Bk}$) réversibles en courant et unidirectionnels en tension.

**10.** Dispositif selon la revendication 9 connecté à une source de tension constante et à une source de courant alternatif symétrique, de fréquence fi, caractérisé en ce que les logiques de commande ($CL_k$) des -n- cellules de commutation sont synchronisées de façon que les signaux de commande ($sc_k$, $sc_{k+1}$) délivrés vers deux cellules ($CL_k$, $CL_{k+1}$) de rangs successifs k et k+1 imposent à ces cellules des états logiques $e_k$ et $e_{k+1}$ tels que :
   . la grandeur logique $e_k$ ET $\overline{e}_{k+1}$ soit périodique, de fréquence 2 fi, double de la fréquence de la source de courant,
   . la grandeur logique $\overline{e}_k$ ET $e_{k+1}$ soit également périodique, avec la même fréquence 2 fi,
l'état logique $e_k$ d'une cellule étant défini comme égal à 1 lorsque l'interrupteur ($I_{Ak}$) de la cellule faisant partie de la série A est passant (l'autre interrupteur ($I_{Bk}$) de la cellule, de la série B, étant bloqué), et égal à 0 lorsque l'interrupteur de ladite série A est bloqué (l'autre interrupteur de la cellule, de la série B, étant passant).

**11.** Dispositif selon la revendication 10, caractérisé en ce que les moyens de pilotage (GP) sont adaptés pour délivrer un signal de référence (sr) alternatif symétrique de fréquence fi, et en ce que :
   . les logiques de commande ($LG_k$) des -n- cellules de commutation sont reliées à des moyens de synchronisation (SYNCHRO) comprenant des moyens de génération de signaux triangulaires ($OSCT$, $RET_2$, $RET_1$) adaptés pour délivrer n signaux triangulaires alternatifs symétriques ($sd_k$), lesdits signaux présentant une même amplitude et une même fréquence -F- multiple de la fréquence fi et étant décalés dans le temps de sorte que le signal ($sd_{k+1}$) de rang k+1 soit retardé dans le temps d'une valeur $1/_{nF}$ par rapport au signal ($sd_k$) de rang k,
   . les n logiques ($LG_k$) comprennent chacune un comparateur recevant le signal de référence (sr) issu des moyens de pilotage (GP) et un signal triangulaire ($sd_k$) issu des moyens de génération, le comparateur de rang k étant connecté à la cellule de commutation ($CL_k$) de rang k pour commander celle-ci en fonction des valeurs relatives des deux signaux (sr, $sd_k$) qu'il reçoit.

**12.** Dispositif selon la revendication 9, connecté à une source de tension constante et à une source de courant alternatif symétrique de fréquence fi, comprenant deux cellules de commutation ($LG_1$, $LG_2$ ; n = 2), caractérisé en ce que les logiques de commande ($LG_1$, $LG_2$) des deux cellules de commutation sont adaptées de sorte que les signaux de commande ($sc_1$, $sc_2$) présentent une fréquence F égale à la fréquence fi de la source de courant, lesdites logiques étant synchronisées de façon que ces signaux de commande imposent aux cellules ($CL_1$, $CL_2$) des états logiques $e_1$ et $e_2$ tels que $e_2$ est obtenu en complémentant $e_1$ et en le décalant d'une demi-période $1/_{2F}$.

**13.** Dispositif selon l'une des revendications 1, 2, 3, 4 ou 5, connecté à une source de tension alternative symétrique et à une source de courant continu en vue de réaliser un convertisseur alternatif/continu et/ou continu/alternatif, dans lequel chaque cellule de commutation ($CL_k$) comprend deux interrupteurs identiques ($I_{Ak}$, $I_{Bk}$) réversibles en tension et unidirectionnels en courant.

**14.** Dispositif selon la revendication 13, connecté à une source de tension alternative symétrique de fréquence fv et à une source de courant constant, caractérisé en ce que les logiques de commande ($LG_k$) des -n- cellules de commutation sont synchronisées de façon que les signaux de commande délivrés vers deux cellules ($CL_k$, $CL_{k+1}$) de rangs successifs k et k+1 imposent à ces cellules des états logiques $e_k$ et $e_{k+1}$ tels que, sur chaque période $1/_F$, la différence entre la durée de l'état $\overline{e}_k$ ET $e_{k+1}$ = 1 et la durée de l'état $e_k$ ET $\overline{e}_{k+1}$ = 1 soit sensiblement égale à

$$\frac{c_k}{I} \quad \cdot \quad \frac{k}{n} \quad \left| \, V_0 \, - \, V_1 \, \right|$$

où

$c_k$ est la capacité du condensateur de rang k,

I est la valeur du courant de la source de courant,

$V_0$ est la tension aux bornes de la source de tension au début de la période $1/_F$ considérée et $V_1$ cette tension à la fin de ladite période,

l'état logique $e_k$ d'une cellule ($CL_k$) étant défini comme égal à 1 lorsque l'interrupteur ($I_{Ak}$) de la cellule faisant partie de la série A est passant (l'autre interrupteur ($I_{Bk}$) de la cellule, de la série B, étant bloqué), et égal à 0 lorsque l'interrupteur de ladite série A est bloqué (l'autre interrupteur de la cellule, de la série B, étant passant).

**15.** Dispositif selon la revendication 14, caractérisé en ce que les moyens de pilotage (GP) sont adaptés pour délivrer un signal de référence (sr) alternatif symétrique de fréquence fv, et en ce que les logiques de commande ($LG_k$) des -n- cellules de commutation sont reliées à des moyens de synchronisation (SYNCHRO) comprenant :

. des moyens de génération de signaux triangulaires (OSCT, $RET_2$, $RET_1$) adaptés pour délivrer n signaux triangulaires alternatifs symétriques ($sd_k$), lesdits signaux présentant une même amplitude et une même fréquence -F- multiple de la fréquence fv et étant décalés dans le temps de sorte que le signal ($sd_{k+1}$) de rang k+1 soit retardé dans le temps d'une valeur $1/_{nF}$ par rapport au signal ($sd_k$) de rang k,

. des moyens de correction ($COR_k$) recevant le signal de référence (sr) issu des moyens de pilotage (GP) et adaptés pour délivrer des signaux de référence corrigés ($sg_k$) d'amplitude relative $g_k$ par rapport à celle des signaux triangulaires ($sd_k$), telle que

$$\left| \, g_k \, - \, g_{k+1} \, \right| \quad = \quad 2 \, \frac{c_k}{I} \cdot \frac{k}{n} \quad \left| \, V_0 - V_1 \, \right| \cdot F$$

. les n logiques ($LG_k$) comprenant chacune un comparateur recevant un signal triangulaire ($sd_k$) et un signal de référence corrigé ($sg_k$), le comparateur de rang k étant connecté à la cellule de commutation ($CL_k$) de rang k pour commander celle-ci en fonction des valeurs relatives des deux signaux ($sd_k$, $sg_k$) qu'il reçoit.

**16.** Dispositif selon l'une des revendications 1, 2, 3, 4 ou 5, connecté à une source de tension alternative symétrique et à une source de courant alternatif symétrique en vue de réaliser un convertisseur alternatif/alternatif, dans lequel chaque cellule de commutation ($CL_k$) comprend deux interrupteurs identiques ($I_{Ak}$, $I_{Bk}$) réversibles en courant et en tension.

**17.** Dispositif selon la revendication 16, connecté à une source de tension alternative symétrique de fréquence fv et à une source de courant alternatif symétrique de fréquence fi, caractérisé en ce que les logiques de commande ($LG_n$) des -n- cellules de commutation sont synchronisées de façon que les signaux de commande ($sc_k$, $sc_{k+1}$) délivrés vers deux cellules ($CL_k$, $CL_{k+1}$) de rangs successifs k et k+1 imposent à ces cellules des états logiques $e_k$ et $e_{k+1}$ tels que, sur chaque période $1/_F$, la différence entre la durée de l'état $\overline{e}_k + e_{k+1}$ = 1 et la durée de l'état $e_k + \overline{e}_{k+1}$ = 1 soit sensiblement égale à

$$2c_k \cdot \frac{k}{n} \cdot \frac{V_0 - V_1}{I_0 + I_1}$$

où $c_k$ est la capacité du condensateur de rang k,

$I_0$ et $V_0$ sont les valeurs des sources de courant et de tension au début de la période $1/_F$ considérée,

et $I_1$ et $V_1$ ces valeurs à la fin de ladite période,

l'état logique $e_k$ d'une cellule étant défini comme égal à 1 lorsque l'interrupteur ($I_{Ak}$) de la cellule faisant partie de la série A est passant (l'autre interrupteur ($I_{Bk}$) de la cellule, de la série B, étant bloqué), et égal à 0 lorsque l'interrupteur de ladite série A est bloqué (l'autre interrupteur de la cellule, de la série B, étant passant).

**18.** Dispositif selon la revendication 17, caractérisé en ce que les logiques de commande ($LG_k$) des -n- cellules de commutation sont reliées à des moyens de synchronisation (SYNCHRO) comprenant :

. des moyens de génération de signaux triangulaires (OSCT, $RET_2$, $RET_1$) adaptés pour délivrer n signaux triangulaires alternatifs symétriques ($sd_k$), lesdits signaux présentant une même amplitude et une même fréquence -F- supérieure aux fréquences fi et fv et étant décalés dans le temps de sorte que le signal ($sd_{k+1}$) de rang k+1 soit retardé dans le temps d'une valeur $1/_{nF}$ par rapport au signal ($sd_k$) de rang k,

. des moyens de correction ($COR_k$), recevant le signal de référence (sr) issu des moyens de pilotage (GP) et adaptés pour délivrer des signaux de référence corrigés ($sg_k$) d'amplitude relative $g_k$ par rapport à celle des signaux triangulaires ($sd_k$), telle que

$$\left| g_k - g_{k+1} \right| = \frac{4 c_k}{I_0 + I_1} \cdot \frac{k}{n} \left| V_0 - V_1 \right| \cdot F$$

. les n logiques ($LG_k$) comprenant chacune un comparateur recevant un signal triangulaire ($sd_k$) et un signal de référence corrigé ($sg_k$), le comparateur de rang k étant connecté à la cellule de commutation ($CL_k$) de rang k pour commander celle-ci en fonction des valeurs relatives des deux signaux ($sd_k$, $sg_k$) qu'il reçoit.

**19.** Dispositif selon l'une des revendications 1 à 18, comprenant deux cellules de commutation.

**20.** Dispositif selon l'une des revendications 1 à 18, comprenant trois cellules de commutation.

## Claims

**1.** Electronic device for converting electrical energy between a voltage source and a current source:

. comprising n controllable switching cells ($CL_1$... $CL_k$... $CL_n$), each of which comprises two switches ($I_{Ak}$, $I_{Bk}$) with $n \geqq 2$, each cell being identified by a subscript k with $1 \leqq k \leqq n$,

. a control logic ($LG_k$) which is connected to each switching cell ($CL_k$) so as to supply it with control signals ($sc_k$) of frequency F, said control signals being capable of ensuring switching in opposite directions of the two switches of the cell,

. directing means (GP) so designed as to supply a reference signal (sr) to the control-logic circuits, said reference signal being a function of the desired energy conversion,

. n homologous cell switches which are connected in series while the n other homologous switches are in turn connected in series so as to produce two symmetrical series, the so-called series A and series B, in which the two switches ($I_{Ak}$, $I_{Bk}$) of a single cell occupy symmetrical positions in relation to the current source,

. the two switch series A and B being interconnected, on the one hand, by a common end to the current source (J), and, on the other hand, by the opposite ends to the voltage source (E), whereby the subscript k assigned to the cells increases from the cell ($CL_1$), the switches of which are directly connected to the current source(k = 1), to the cell ($CL_n$), the switches of which are directly connected to the voltage source (k = n),

said converting device being characterised in that:

. capacitors ($c_k$) are associated with the switching cells ($CL_k$) so that the symmetrical terminals of the two switches ($I_{Ak}$, $I_{Bk}$) of each cell are connected to each other by a capacitor in order to maintain a voltage, the so-called capacitor load voltage, between said terminals, while ensuring alternating current flow from one switch to the other switch of the cell,

. the control-logic circuits ($LG_k$) of the n switching cells are synchronised so as to distribute their control signals ($sc_k$) in terms of time so that the current flowing in each capacitor ($c_k$) exhibits, during one period 1/F, a mean value substantially proportional to the voltage variation at the terminals of the voltage source during this same period, and in particular substantially zero in the case of a direct voltage source.

2. Device according to Claim 1, characterised in that each capacitor ($c_k$) associated with a switching cell ($CL_k$) exhibits a voltage value higher than a threshold $V_{ck}$, which increases with the subscript k of the cell with which said capacitor is associated while $V_{ck} = k.Vm/n$ where Vm is the maximum voltage of the voltage source (E).

3. Device according to one of Claims 1 or 2, characterised in that each capacitor ($c_k$) associated with the switching cell ($CL_k$) having the subscript k is so dimensioned as to exhibit a capacity $c_k$ sufficient for the voltage variations at the terminals of said capacitor to be lower than 0.2.V/n, where V is the voltage of the voltage source (E).

4. Device according to one of Claims 1, 2 or 3, in which the switches ($I_{Ak}$, $I_{Bk}$) of the switching cells ($CL_k$) are static semi-conductor switches, said switches exhibiting a voltage reversibility identical with that of the voltage source (E) and a current reversibility identical with that of the current source (J).

5. Device according to one of Claims 1, 2, 3 or 4, characterised in that the control-logic circuits ($LG_k$) are connected to synchronising means (SYNCHRO) comprising an oscillator (OSC) of frequency F, a series of delay circuits ($RET_k$) supplying a system of signals ($sd_k$) in which any two successive signals are offset by a temporal interval equal to 1/nF, correctors ($COR_k$) supplying correction signals ($sg_k$) proportional to the subscript k of the corrector, to the frequency F, to the voltage variation $V_0$-$V_1$ during the period 1/F, and to the capacity of the capacitor with the same subscript k, and inversely proportional to the mean value ($I_0$+$I_1$)/2 of the current during said period, as well as adders ($SM_k$) with a view to supplying synchronisation signals ($sy_k$) on the basis of offset signals ($sd_k$) and correction signals ($sg_k$), whereby each control-logic circuit comprises a comparator receiving, on the one hand, the reference signal (sr) emanating from the directing means (GP) and, on the other hand, the synchronisation signal ($sy_k$) with the corresponding subscript k emanating from the synchronising means (SYNCHRO).

6. Device according to one of Claims 1, 2, 3, 4 or 5, connected to a direct-voltage source and to a direct-current source with a view to providing a d.c./d.c converter in which each switching cell ($CL_k$) comprises, on the one hand, a switch ($I_{Ak}$) of the type which can be switched on and off at will and, on the other hand, a switch ($I_{Bk}$) for double automatic switching.

7. Device according to Claim 6, characterised in that the control-logic circuits ($LG_k$) of the n switching cells are synchronised so that the control signals ($sc_k$, $sc_{k+1}$) supplied to two cells ($CL_k$, $CL_{k+1}$) with successive subscripts k and k+1, impart to said cells logic states $e_k$ and $e_{k+1}$ so that if $e_k \neq e_{k+1}$ the cumulative times during which $e_k$ AND $\overline{e}_{k+1}$ = 1 are substantially equal to the cumulative times during which $\overline{e}_k$ AND $e_{k+1}$ = 1, the logic state $e_k$ of a cell ($CL_k$) being defined as equal to 1 when the cell switch ($I_{Ak}$) forming part of the series A is on (the other cell switch ($I_{Bk}$) forming part of the series B being off), and is defined as equal to 0 when the switch ($I_{Ak}$) forming part of said series A is off (the other cell switch ($I_{Bk}$) forming part of the series B being on).

8. Device according to Claim 7, characterised in that the control-logic circuits ($LG_k$) of the n switching cells are connected to synchronising means (SYNCHRO) comprising means for generating phase-shifted triangular signals (OSCT, $RET_2$, $RET_1$) capable of supplying control signals ($sd_3$, $sd_2$, $sd_1$) of the same frequency F, where any signal is phase-shifted by 2 $\pi$/n in relation to the following signal.

9. Device according to one of Claims 1, 2, 3, 4 or 5 connected to a direct-voltage source and to a source of balanced alternating current with a view to providing a d.c./a.c. converter and/or an a.c./d.c. converter in which each switching cell ($CL_k$) comprises two identical current-reversible switches ($I_{Ak}$, $I_{Bk}$) of unidirectional voltage.

10. Device according to Claim 9, connected to a direct-voltage source and to a source of balanced alternating current of frequency fi, characterised in that the control-logic circuits ($CL_k$) of the n switching cells are synchronised in such a way as to ensure that the control signals ($sc_k$, $sc_{k+1}$) supplied to any two cells ($CL_k$, $CL_{k+1}$) with successive subscripts k and k+1 produce in said cells logic states $e_k$ and $e_{k+1}$ so that:

. the logic magnitude $e_k$ AND $\overline{e}_{k+1}$ is periodic and has a frequency 2 fi which is twice the frequency of the current source,

. the logic magnitude $\overline{e}_k$ AND $e_{k+1}$ is also periodic and has the same frequency 2 fi,

the logic state $e_k$ of a cell being defined as equal to 1 when the cell switch ($I_{Ak}$) forming part of the series A is on (the other cell switch ($I_{Bk}$) forming part of the series B being off) and is defined as equal to 0 when the switch forming part of said series A is off (the other cell switch forming part of the series B being on).

11. Device according to Claim 10, characterised in that the directing means (GP) are so designed as to supply a balanced a.c. reference signal (sr) of frequency fi and in that:

. the control-logic circuits ($LG_k$) of the n switching cells are connected to synchronising means (SYNCHRO) comprising means for generating triangular signals (OSCT, $RET_2$, $RET_1$), said generating means being so designed as to supply n balanced triangular a.c. signals ($sd_k$), said signals having the same amplitude and the same frequency F which is a multiple of the frequency fi and being offset in time whereby the signal ($sd_{k+1}$) with the subscript k+1 is delayed in relation to the signal ($sd_k$) with the subscript k by a value 1/nF,

. the n logic circuits ($LG_k$) each comprise a comparator receiving the reference signal (sr) emanating from the directing means (GP) and a triangular signal ($sd_k$) emanating from the generating means, the comparator with the subscript k being connected to the switching cell ($CL_k$) with the subscript k so as to control the latter as a function of the relative values of the two signals (sr, $sd_k$) which it receives.

12. Device according to Claim 9, connected to a direct-voltage source and a source of balanced alternating current of frequency fi, comprising two switching cells ($LG_1$, $LG_2$ ; n = 2), characterised in that the control-logic circuits ($LG_1$, $LG_2$) of the two switching cells are so designed as to ensure that the control signals ($sc_1$, $sc_2$) are of a frequency F equal to the frequency fi of the current source, said logic circuits being synchronised in such a way that the control signals impart logic states $e_1$ and $e_2$ to the cells ($CL_1$, $CL_2$) so that $e_2$ is obtained by complementing $e_1$ and by offsetting it by a half-period 1/2F.

13. Device according to one of Claims 1, 2, 3, 4 or 5 connected to a source of balanced alternating voltage and to a direct-current source so as to produce an a.c./d.c. converter and/or a d.c./a.c. converter in which each switching cell ($CL_k$) comprises two identical voltage-reversible switches ($I_{Ak}$, $I_{Bk}$) of unidirectional current.

14. Device according to Claim 13, connected to a source of balanced alternating voltage of frequency fv and to a direct-current source, characterised in that the control-logic circuits ($LG_k$) of the n switching cells are synchronised in such a way as to ensure that the control signals supplied to any two cells ($CL_k$, $CL_{k+1}$) with successive subscripts k and k+1 impart to said cells logic states $e_k$ and $e_{k+1}$ so that during each period 1/F the difference between the duration of the state $\overline{e}_k$ AND $e_{k+1}$ = 1 and the duration of the state $e_k$ AND $\overline{e}_{k+1}$ = 1 is substantially equal to

$$\frac{c_k}{I} \cdot \frac{k}{n} \left| V_0 - V_1 \right|$$

where

$c_k$ is the capacity of the capacitor with the index k,

I is the current value of the current source,

$V_0$ is the voltage at the terminals of the voltage source at the start of the period 1/F in question, and $V_1$ is said voltage at the end of said period,

the logic state $e_k$ of a cell ($CL_k$) being defined as equal to 1 when the cell switch ($I_{Ak}$) forming part of the series A is on (the other cell switch ($I_{Bk}$) forming part of the series B being off), and is defined as equal to 0 when the switch forming part of said series A is off, (the other cell switch forming part of the series B being on).

15. Device according to Claim 14, characterised in that the directing means (GP) are so designed as to supply a balanced a.c. reference signal (sr) of frequency vf and in that the control-logic circuits ($LG_k$) of the n switching cells are connected to synchronising means (SYNCHRO) comprising:

. means for generating triangular signals (OSCT, $RET_2$, $RET_1$) so designed as to supply n balanced triangular a.c. signals ($sd_k$), said signals having the same amplitude and the same frequency F which is a multiple of the frequency fv and being offset in time so that the signal ($sd_{k+1}$) with the subscript k+1 is delayed in relation to the signal ($sd_k$) with the subscript k by a value 1/nF,

. correcting means ($COR_k$) which receive the reference signal (sr) emanating from the directing means (GP) and so designed as to supply corrected reference signals ($sg_k$) with a relative amplitude $g_k$ in relation to the amplitude of the triangular signals ($sd_k$) so that

$$\left| g_k - g_{k+1} \right| = \frac{2c_k}{I} \cdot \frac{k}{n} \left| V_0 - V_1 \right| \cdot F$$

. the n logic circuits ($LG_k$), each of which comprises a comparator receiving a triangular signal ($sd_k$) and a corrected reference signal ($sg_k$), the comparator with the subscript k being connected to the switching cell ($CL_k$) with the subscript k so as to control the latter as a function of the relative values of the two signals ($sd_k$, $sg_k$) which it receives.

16. Device according to one of Claims 1, 2, 3, 4 or 5, connected to a source of balanced alternating voltage and to a source of balanced alternating current so as to provide an a.c./a.c. converter in which each switching cell ($CL_k$) comprises two identical current-reversible and voltage-reversible switches ($I_{Ak}$, $I_{Bk}$).

17. Device according to Claim 16, connected to a source of balanced alternating voltage of frequency fv and to a source of balanced alternating current of frequency fi, characterised in that the control-logic circuits ($LG_n$) of the n switching cells are synchronised in such a way as to ensure that the control signals ($sc_k$, $sc_{k+1}$) supplied to the two cells ($CL_k$, $CL_{k+1}$) with successive subscripts k and k+1 impart to said cells logic states $e_k$ and $e_{k+1}$, so that for each period 1/F the difference between the duration of the state $\overline{e}_k + e_{k+1}$ = 1 and the duration of the state $e_k + \overline{e}_{k+1}$ = 1 is substantially equal to

$$2c_k \cdot \frac{k}{n} \cdot \frac{V_0 - V_1}{I_0 + I_1}$$

where $c_k$ is the capacity of the capacitor with the subscript k,
$I_0$ and $V_0$ are the values of the current and voltage sources at the start of the period 1/F in question,
and $I_1$ and $V_1$ are said values at the end of said period,
the logic state $e_k$ of a cell being defined as equal to 1 when the cell switch ($I_{Ak}$) forming part of the series A is on (the other cell switch ($I_{Bk}$) forming part of the series B being off) and is defined as equal to 0 when the switch forming part of said series A is off (the other cell switch forming part of the series B being on).

18. Device according to Claim 17, characterised in that the control-logic circuits ($LG_k$) of the n switching cells are connected to synchronising means (SYNCHRO) comprising:

. means for generating triangular signals (OSCT, $RET_2$, $RET_1$) so designed as to supply n balanced triangular alternating signals ($sd_k$), said signals having the same amplitude and the same frequency F which is higher than the frequencies fi and fv and being offset in time so as to ensure that the signal ($Sd_{k+1}$) with the subscript k+1 is delayed in relation to the signal ($sd_k$) with the subscript k by a value 1/nF,

. correcting means ($COR_k$) which receive the reference signal (sr) emanating from the directing means (GP) and so designed as to supply corrected reference signals ($sc_k$) with a relative amplitude $g_k$ in relation to the amplitude of the triangular signals ($sd_k$) so that

$$\left| g_k - g_{k+1} \right| = \frac{4 \, c_k}{I_0 + I_1} \cdot \frac{k}{n} \left| V_0 - V_1 \right| \cdot F$$

. the n logic circuits ($LG_k$) each comprise a comparator which receives a triangular signal ($sd_k$) and a corrected reference signal ($sg_k$), the comparator with the subscript k being connected to the switching

cell ($CL_k$) with subscript k so as to control the latter as a function of the relative values of the two signals ($sd_k$, $sg_k$) which it receives.

19. Device according to one of Claims 1 to 18, comprising two switching cells.

20. Device according to one of Claims 1 to 18, comprising three switching cells.

**Patentansprüche**

1. Elektronische Vorrichtung zum Umformen von elektrischer Energie zwischen einer Spannungsquelle und einer Stromquelle:

   . umfassend-n-steuerbare Schaltzellen ($CL_1$... $CL_k$... $CL_n$), von denen jede zwei Schalter ($I_{Ak}$, $I_{Bk}$) mit $n \geqq 2$ aufweist, wobei jede Zelle durch einen Index k bezeichnet ist, während $1 \leqq k \leqq n$,

   . bei dem eine Steuerlogikschaltung ($LG_k$) an jede Schaltzelle ($CL_k$) angeschlossen ist, um dieser Steuersignale ($sc_k$) der Frequenz F zuzuführen, wobei die besagten Steuersignale so beschaffen sind, daß sie entgegengesetzte Schaltungen der beiden Schalter der Zelle gewährleisten,

   . bei dem Steuermittel (GP) so beschaffen sind, daß sie den Steuerlogikschaltungen in Abhängigkeit von der gewünschten Energieumformung ein Bezugssignal (sr) zuführen,

   . bei dem-n-homologe Schalter der Zellen in Reihe geschaltet sind und die anderen-n-homologen Schalter ihrerseits in Reihe geschaltet sind, so daß zwei symmetrische Reihen, die sogenannte Reihe A und die sogenannte Reihe B, gebildet werden, in denen die beiden Schalter ($I_{Ak}$, $I_{Bk}$) ein und derselben Zelle im Verhältnis zu der Stromquelle symmetrische Lagen einnehmen,

   . bei dem die beiden Schalterreihen A und B einerseits durch ein gemeinsames Ende mit der Stromquelle (J) und andererseits durch ihre entgegengesetzten Enden mit der Spannungsquelle (E) verbunden sind, wobei der den Zellen zugeteilte Index k von der Zelle ($CL_1$), deren Schalter unmittelbar mit der Stromquelle (k = 1) verbunden sind, bis zu der Zelle ($CL_n$), deren Schalter unmittelbar mit der Spannungsquelle (k = n) verbunden sind, zunimmt, und zwar ist die besagte Umformvorrichtung dadurch gekennzeichnet, daß:

   . mit den Schaltzellen ($CL_k$) Kondensatoren ($c_k$) so verbunden sind, daß die symmetrischen Klemmen der beiden Schalter ($I_{Ak}$, $I_{Bk}$) jeder Zelle über einen Kondensator miteinander verknüpft sind, um zwischen den besagten Klemmen eine Spannung, die sogenannte Kondensatorladespannung, aufrechtzuerhalten und um einen wechselweisen Stromfluß von dem einen Schalter zu dem anderen Schalter der Zelle zu gewährleisten,

   . bei dem die Steuerlogikschaltungen ($LG_k$) der -n-Schaltzellen synchronisiert sind, um deren Steuersignale ($sc_k$) der Zeit nach zu verteilen, so daß der in jedem Kondensator ($c_k$) fließende Strom während einer Periode 1/F einen mittleren Wert aufweist, der zu der Änderung der Spannung an den Klemmen der Spannungsquelle während der gleichen Periode im wesentlichen proportional und insbesondere bei einer Gleichspannungsquelle im wesentlichen null ist.

2. Vorrichtung nach Anspruch 1, dadurch gekennzeichnet, daß jeder mit einer Schaltzelle ($CL_k$) in Verbindung stehende Kondensator ($c_k$) einen Spannungswert aufweist, der um so höher ist als ein Schwellwert $V_{ck}$, je höher der Index k der Zelle ist, mit der der besagte Kondensator in Verbindung steht, wobei $V_{ck}$ = k.Vm/n und Vm die Höchstspannung der Spannungsquelle (E) ist.

3. Vorrichtung nach einem der Ansprüche 1 oder 2, dadurch gekennzeichnet, daß jeder mit der Schaltzelle ($CL_k$) mit dem Index k in Verbindung stehende Kondensator ($c_k$) so bemessen ist, daß er eine Kapazität ($c_k$) bietet, die ausreichend hoch ist, damit die Spannungsschwankungen an den Klemmen des besagten Kondensators geringer sind als 0,2.V/n, wobei V die Spannung der Spannungsquelle (E) ist.

4. Vorrichtung nach einem der Ansprüche 1, 2 oder 3, bei der die Schalter ($I_{Ak}$, $I_{Bk}$) der Schaltzellen ($CL_k$) statische Halbleiterschalter sind, die die gleiche Spannungsumsteuerbarkeit aufweisen wie die Spannungsquelle (E), und bei denen die Umsteuerbarkeit des Stromes mit der der Stromquelle (J) identisch ist.

5. Vorrichtung nach einem der Ansprüche 1, 2, 3 oder 4, dadurch gekennzeichnet, daß die Steuerlogikschaltungen ($LG_k$) mit Synchronisationsmitteln (SYNCHRO) verbunden sind, die einen Oszillator (OSC) der Frequenz F, eine Reihe von Verzögerungsschaltungen ($RET_k$), die ein System von Signalen ($sd_k$) liefern,

welche bei je zwei aufeinander folgenden Signalen in einem zeitlichen Abstand von 1/nF sind, Korrekturglieder (COR$_k$), die Korrektursignale (sg$_k$) liefern, welche zu dem Index k des Korrekturglieds, zu der Frequenz F, zu der Spannungsänderung $V_0$-$V_1$ während der Periode 1/F und zu der Kapazität des Kondensators mit dem gleichen Index k proportional und zu dem mittleren Wert ($I_0$+$I_1$)/2 des Stromes während der besagten Periode umgekehrt proportional sind, sowie Summierglieder (SM$_k$) zwecks Lieferung von Synchronisationssignalen (sy$_k$) aufgrund der versetzten Signale (sd$_k$) und der Korrektursignale (sg$_k$) umfassen, wobei jede Steuerlogikschaltung eine Vergleichsstufe umfaßt, die einerseits das von den Steuermitteln (GP) abgegebene Bezugssignal (sr) und andererseits das von den Synchronisationsmitteln (SYNCHRO) abgegebene Synchronisationssignal (sy$_k$) mit dem entsprechenden Index k empfängt.

6. Vorrichtung nach einem der Ansprüche 1, 2, 3, 4 oder 5, wobei die besagte Vorrichtung an eine Gleichspannungsquelle und an eine Gleichstromquelle angeschlossen ist, um einen Gleichspannungswandler zu bilden, in dem jede Schaltzelle (CL$_k$) einerseits einen Schalter (I$_{Ak}$), der solcher Art ist, daß sich das Ein- und Ausschalten steuern läßt, und andererseits einen Schalter (I$_{Bk}$) für selbsttätige Doppelschaltung, umfaßt.

7. Vorrichtung nach Anspruch 6, dadurch gekennzeichnet, daß die Steuerlogikschaltungen (LG$_k$) der-n-Schaltzellen so synchronisiert sind, daß die den beiden Zellen (CL$_k$, CL$_{k+1}$) mit aufeinander folgenden Indexen k und k+1 zugeführten Steuersignale (sc$_k$, sc$_{k+1}$) den besagten Zellen logische Zustände e$_k$ und e$_{k+1}$ vermitteln, so daß, wenn e$_k \neq$ e$_{k+1}$, die summierten Zeiten, während denen e$_k$ UND $\overline{e}_{k+1}$ =1, den summierten Zeiten, während denen $\overline{e}_k$ UND e$_{k+1}$ = 1 sind, im wesentlichen gleich sind, wobei der Logikzustand e$_k$ einer Zelle (CL$_k$) als gleich 1 definiert ist, wenn der zu der Reihe A gehörende Zellenschalter (I$_{Ak}$) Strom fiihrt (während der zu der Reihe B gehörende andere Zellenschalter (I$_{Bk}$) gesperrt ist), und als gleich 0 definiert ist, wenn der Schalter (I$_{Ak}$) der besagten Reihe A gesperrt ist (während der andere Zellenschalter (I$_{Bk}$) der Reihe B Strom führt).

8. Vorrichtung nach Anspruch 7, dadurch gekennzeichnet, daß die Steuerlogikschaltungen (LG$_k$) der-n-Schaltzellen mit Synchronisationsmitteln (SYNCHRO) verbunden sind, die Mittel zur Erzeugung phasenverschobener Dreiecksignale (OSCT, RET$_2$, RET$_1$) umfassen, welche in der Lage sind, Steuersignale (sd$_3$, sd$_2$, sd$_1$) der gleichen Frequenz-F-zu liefern, wobei jedes Signal im Verhältnis zu dem folgenden Signal um 2 $\pi$/n phasenverschoben ist.

9. Vorrichtung nach einem der Ansprüche 1, 2, 3, 4 oder 5, wobei die besagte Vorrichtung mit einer Gleichspannungsquelle und einer Quelle symmetrischen Wechselstroms verbunden ist, um einen Wechselrichter und/oder einen Gleichrichter zu schaffen, bei dem jede Schaltzelle (CL$_k$) zwei identische Schalter (I$_{AK}$, I$_{BK}$) umfaßt, die in bezug auf den Strom umsteuerbar und in bezug auf die Spannung einheitlich gerichtet sind.

10. Vorrichtung nach Anspruch 9, wobei die besagte Vorrichtung an eine Quelle konstanter Spannung und an eine Quelle symmetrischen Wechselstroms der Frequenz fi angeschlossen ist, dadurch gekennzeichnet, daß die Steuerlogikschaltungen (CL$_k$) der-n-Schaltzellen so synchronisiert sind, daß die den beiden Zellen (CL$_k$, CL$_{k+1}$) mit aufeinander folgenden Indexen k und k+1 zugeführten Steuersignale (sc$_k$, sc$_{k+1}$) den besagten Zellen Logikzustände e$_k$ und e$_{k+1}$ vermitteln, so daß:
   . die Logikgröße e$_k$ UND $\overline{e}_{k+1}$ periodisch ist und die Frequenz 2 fi, die doppelte Frequenz der Stromquelle, aufweist,
   . die Logikgröße $\overline{e}_k$ UND e$_{k+1}$ ebenfalls periodisch ist und die gleiche Frequenz 2 fi aufweist,
   wobei der Logikzustand e$_k$ einer Zelle als gleich 1 definiert ist, wenn der zu der Reihe A gehörende Schalter (I$_{Ak}$) der Zelle Strom führt (während der andere zu der Reihe B gehörende Schalter (I$_{Bk}$) der Zelle gesperrt ist) und als gleich 0 definiert ist, wenn der Schalter der besagten Reihe A gesperrt ist (während der Zellenschalter der Reihe B Strom führt).

11. Vorrichtung nach Anspruch 10, dadurch gekennzeichnet, daß die Steuermittel (GP) so beschaffen sind, daß sie ein symmetrisches Wechselstrombezugssignal (sr) der Frequenz fi liefern, sowie dadurch, daß:
   . die Steuerlogikschaltungen (LG$_k$) der-n-Schaltzellen mit Synchronisationsmitteln (SYNCHRO) verbunden sind, die Mittel zur Erzeugung von Dreiecksignalen (OSCT, RET$_2$, RET$_1$) umfassen, welche so beschaffen sind, daß sie n symmetrische Dreieck-Wechselstromsignale (sd$_k$) liefern, wobei die besagten Signale die gleiche Amplitude und die gleiche Frequenz-F-, die ein Mehrfaches der Frequenz fi ist, aufweisen und der Zeit nach so versetzt sind, daß das Signal (sd$_{k+1}$) mit dem Index k+1 im Verhältnis zu dem Signal ($sd_k$) mit dem Index k der Zeit nach um einen Wert 1/nF verzögert ist,

. jede der n Logikschaltungen ($LG_k$) eine Vergleichsstufe umfaßt, die das von den Steuermitteln (GP) abgegebene Bezugssignal (sr) sowie ein von den Signalerzeugungsmitteln abgegebenes Dreieck-signal ($sd_k$) empfängt, wobei die Vergleichsstufe mit dem Index k mit der Schaltzelle ($CL_k$) mit dem Index k verbunden ist, so daß sie diese in Abhängigkeit von den relativen Werten der beiden von ihr empfangenen Signale (sr, $sd_k$) steuert.

12. Vorrichtung nach Anspruch 9, wobei die besagte Vorrichtung mit einer Quelle konstanter Spannung und einer Quelle symmetrischen Wechselstroms der Frequenz fi in Verbindung steht, umfassend zwei Schalt-zellen ($LG_1$, $LG_2$; n =2),

dadurch gekennzeichnet, daß die Steuerlogikschaltungen ($LG_1$, $LG_2$) der beiden Schaltzellen so beschaffen sind, daß die Steuersignale ($sc_1$, $sc_2$) eine der Frequenz fi der Stromquelle gleiche Frequenz F aufweisen, wobei die besagten Logikschaltungen so synchronisiert sind, daß diese Steuersignale den Zellen ($CL_1$, $CL_2$) Logikzustände $e_1$ und $e_2$ vermitteln, die so beschaffen sind, daß $e_2$ durch Komplemen-tieren von $e_1$ und durch Versetzen davon um eine Halbperiode 1/2F gewonnen wird.

13. Vorrichtung nach einem der Ansprüche 1, 2, 3, 4 oder 5, wobei die besagte Vorrichtung mit einer Quelle symmetrischer Wechselspannung und einer Gleichstromspannung in Verbindung steht, um einen Gleichrichter und/oder einen Wechselrichter zu erzielen, bei dem jede Schaltzelle ($CL_k$) zwei identische Schalter ($I_{Ak}$, $I_{Bk}$) umfaßt, die in bezug auf die Spannung umsteuerbar und in bezug auf den Strom einheitlich gerichtet sind.

14. Vorrichtung nach Anspruch 13, wobei die besagte Vorrichtung an eine Quelle symmetrischer Wechselspannung der Frequenz fv und an eine Gleichstromquelle angeschlossen ist, dadurch gekennzeichnet, daß die Steuerlogikschaltungen ($LG_k$) der-n-Schaltzellen so synchronisiert sind, daß die den beiden Zel-len ($CL_k$, $CL_{k+1}$) mit aufeinander folgenden Indexen k und k+1 zugeführten Steuersignale den besagten Zellen Logikzustände $e_k$ und $e_{k+1}$ vermitteln, die so beschaffen sind, daß je Periode 1/F der Unterschied zwischen der Dauer des Zustands $\overline{e}_k$ UND $e_{k+1}$ = 1 und der Dauer des Zustands $e_k$ UND $\overline{e}_{k+1}$ im wesent-lichen gleich

$$\frac{c_k}{I} \cdot \frac{k}{n} \left| V_0 - V_1 \right|$$

ist,

wobei $c_k$ die Kapazität des Kondensators mit dem Index k ist,

I der Stromwert der Stromquelle ist,

$V_0$ die Spannung an den Klemmern der Spannungsquelle zu Beginn der betreffenden Periode 1/F und $V_1$ diese Spannung bei Abschluß der besagten Periode ist,

wobei der Logikzustand $e_k$ einer Zelle ($CL_k$) als gleich 1 definiert ist, wenn der zu der Reihe A gehörende Zellenschalter ($I_{Ak}$) Strom führt (während der Zellenschalter ($I_{Bk}$) der Reihe B gesperrt ist), und als 0 definiert ist, wenn der Schalter der besagten Reihe A gesperrt ist (während der Zellenschalter der Reihe B Strom führt).

15. Vorrichtung nach Anspruch 14, dadurch gekennzeichnet, daß die Steuermittel (GP) so beschaffen sind, daß sie ein symmetrisches Wechselstrombezugssignal (sr) der Frequenz fv liefern, sowie dadurch, daß die Steuerlogikschaltungen ($LG_k$) der-n-Schaltzellen mit Synchronisationsmitteln (SYNCHRO) verbunden sind, umfassend:

. Mittel zur Erzeugung von Dreiecksignalen (OSCT, $RET_2$, $RET_1$), die so beschaffen sind, daß sie n symmetrische Wechselstrom-Dreiecksignale ($sd_k$) liefern, wobei die besagten Signale die gleiche Amplitude und die gleiche Frequenz-F-, ein Vielfaches der Frequenz fv, aufweisen und der Zeit nach so versetzt sind, daß das Signal ($sd_{k+1}$) mit dem Index k+1 im Verhältnis zu dem Signal ($sd_k$) mit dem Index k der Zeit nach um einen Wert 1/nF versetzt ist,

. Korrekturmittel ($COR_k$), die das von den Steuermitteln (GP) abgegebene Bezugssignal (sr) empfangen und so beschaffen sind, daß sie korrigierte Bezugssignale ($sg_k$) der relativen Amplitude $g_k$ liefern, die zu der der Dreiecksignale ($sd_k$) im Verhältnis steht, so daß

EP 0 555 432 B1

$$\left| g_k - g_{k+1} \right| = 2 \frac{c_k}{I} \cdot \frac{k}{n} \left| V_0 - V_1 \right| \cdot F$$

. die n Logikschaltungen ($LG_k$), von denen jede eine Vergleichsstufe umfaßt, die ein Dreiecksignal ($sd_k$) und ein korrigiertes Bezugssignal ($sg_k$) empfängt, wobei die Vergleichsstufe mit dem Index k mit der Schaltzelle ($CL_k$) mit dem Index k in Verbindung steht, so daß sie diese in Abhängigkeit von den relativen Werten der beiden von ihr empfangenen Signale ($sd_k$, $sg_k$) steuert.

16. Vorrichtung nach einem der Ansprüche 1, 2, 3, 4 oder 5, wobei die besagte Vorrichtung mit einer Quelle symmetrischer Wechselspannung und mit einer Quelle symmetrischen Wechselstroms in Verbindung steht, um einen Wechselstromumformer zu erzielen, bei dem jede Schaltzelle ($CL_k$) zwei identische Schalter ($I_{Ak}$, $I_{Bk}$) umfaßt, die in bezug auf Strom und Spannung umsteuerbar sind.

17. Vorrichtung nach Anspruch 16, wobei die besagte Vorrichtung mit einer Quelle symmetrischer Wechselspannung der Frequenz fv und mit einer Quelle symmetrischen Wechselstroms der Frequenz fi in Verbindung steht, dadurch gekennzeichnet, daß die Steuerlogikschaltungen ($LG_n$) der-n-Schaltzellen so synchronisiert sind, daß die den beiden Zellen ($CL_k$, $CL_{k+1}$) mit aufeinander folgenden Indexen k und k+1 zugeführten Steuersignale ($sc_k$, $sc_{k+1}$) den besagten Zellen Logikzustände $e_k$ und $e_{k+1}$ vermitteln, so daß je Periode 1/F der Unterschied zwischen der Dauer des Zustands $\overline{e}_k + e_{k+1} = 1$ und der Dauer des Zustands $e_k + \overline{e}_{k+1} = 1$ im wesentlichen gleich

$$2c_k \cdot \frac{k}{n} \cdot \frac{V_0 - V_1}{I_0 + I_1}$$

ist,
wobei $c_k$ die Kapazität des Kondensators mit dem Index k, $I_0$ und $V_0$ die Werte der Strom- und Spannungsquellen zu Beginn der betreffenden Periode 1/F sind
und $I_1$ und $V_1$ diese Werte bei Abschluß der besagten Periode sind,
wobei der Logikzustand $e_k$ einer Zelle als gleich 1 definiert ist, wenn der zu der Reihe A gehörende Zellenschalter ($I_{Ak}$) Strom führt (während der Zellenschalter ($I_{Bk}$) der Reihe B gesperrt ist) und als gleich 0 definiert ist, wenn der Schalter der besagten Reihe A gesperrt ist (während der Zellenschalter der Reihe B Strom führt).

18. Vorrichtung nach Anspruch 17, dadurch gekennzeichnet, daß die Steuerlogikschaltungen ($LG_k$) der-n-Schaltzellen mit Synchronisiermitteln (SYNCHRO) verbunden sind, umfassend:
. Mittel zur Erzeugung von Dreiecksignalen (OSCT, $RET_2$, $RET_1$), die so beschaffen sind, daß sie n symmetrische Wechselstrom-Dreiecksignale ($sd_k$) liefern, wobei die besagten Signale die gleiche Amplitude und die gleiche Frequenz -F-, die höher ist als die Frequenzen fi und fv, aufweisen und der Zeit nach so versetzt sind, daß das Signal ($sd_{k+1}$) mit dem Index k+1 in Verhältnis zu dem Signal ($sd_k$) mit dem Index k der Zeit nach um einen Wert 1/nF verzögert ist,
. Korrekturmittel ($COR_k$), die das von den Steuermitteln (GP) abgegebene Bezugssignal (sr) empfangen und so beschaffen sind, daß sie korrigierte Bezugssignale ($sg_k$) der relativen Amplitude $g_k$ liefern, die im Verhältnis zu der Amplitude der Dreiecksignale ($sd_k$, $sg_k$) steht, so daß

$$\left| g_k - g_{k+1} \right| = \frac{4c_k}{I_0 + I_1} \cdot \frac{k}{n} \left| V_0 - V_1 \right| \cdot F$$

ist
. die n Logikschaltungen ($LG_k$), von denen jede eine Vergleichsstufe umfaßt, die ein Dreiecksignal ($sd_k$) und ein korrigiertes Bezugssignal ($sg_k$) empfängt, wobei die Vergleichsstufe mit dem Index k mit der Schaltzelle ($CL_k$) mit dem Index k in Verbindung steht, so daß sie diese in Abhängigkeit von den relativen Werten der beiden von ihr empfangenen Signale ($sd_k$, $sg_k$) steuert.

19. Vorrichtung nach einem der Ansprüche 1 bis 18, umfassend zwei Schaltzellen.

20. Vorrichtung nach einem der Ansprüche 1 bis 18, umfassend drei Schaltzellen.

20

Fig 1

Fig. 2

Fig. 3a

$\Delta c_k$

O

$\Delta c_{k+1}$

O

t

t

Fig. 3b

$Ic_k$

$+ I$

O

$- I$

t

Fig. 3c

V

$k \dfrac{V}{h}$

$Vc_k$

O

t

Fig. 4

Fig. 5

EP 0 555 432 B1

I

ic1

I

ic2

Vs

0

0

0

Fig. 6

EP 0 555 432 B1

Fig. 7

Fig. 8

Fig. 9

sd2
sd1
sr

sc3
sr
sd3

EP 0 555 432 B1

Fig. 10

Fig. 11

Fig. 12

EP 0 555 432 B1

Fig. 13

sc2

sc1

i

ic1

0

0

0

EP 0 555 432 B1

Vs

I

Fig. 14

Fig. 15

Fig. 16

EP 0 555 432 B1

36

V

Δr

Fig.17

Fig. 18

EP 0 555 432 B1

Fig. 19

EP 0 555 432 B1

Fig. 20

Fig. 21

Fig. 22

EP 0 555 432 B1

Fig . 23

Fig. 24

EP 0 555 432 B1

Fig 25

Fig. 26

Fig. 27